# EUROPEAN PATENT APPLICATION

(11) **EP 4 746 308 A1**
(43) Date of publication of application: **20.05.2026**
(21) Application number: 24854494.2
(22) Date of filing: 19.08.2024
(51) Int. Cl.: H04B 7/06, H04B 17/373, H04W 72/231, H04W 72/232, H04L 5/00, H04W 8/24, H04L 25/02, G06N 20/00

(54) **METHOD AND DEVICE FOR SPATIAL-DOMAIN CHANNEL PREDICTION BASED ON ARTIFICIAL INTELLIGENCE**

(30) Priority: 17.08.2023 KR 20230107833
(71) Applicant: Samsung Electronics Co., Ltd., Suwon-si, Gyeonggi-do 16677 (KR)
(72) Inventor: KIM, Wonjun, Suwon-si, Gyeonggi-do 16677 (KR); KIM, Suhwook, Suwon-si, Gyeonggi-do 16677 (KR); SEO, Bongsung, Suwon-si, Gyeonggi-do 16677 (KR); LEE, Deokhui, Suwon-si, Gyeonggi-do 16677 (KR)
(74) Representative: Gulde & Partner
(86) International application number: PCT/KR2024/012262
(87) International publication number: WO 2025/037943

(57) **Abstract**

The present disclosure relates to a 5G or 6G communication system for supporting higher data transmission rates than 4G communication systems such as LTE. The present disclosure relates to a method performed by a terminal in a wireless communication system and a device performing same, the method comprising the steps of: receiving information related to a channel state information-reference signal (CSI-RS) from a base station; measuring a partial antenna port CSI-RS, transmitted from the base station, on the basis of the information related to the CSI-RS; estimating a channel state for a partial antenna port on the basis of the measurement of the partial antenna port CSI-RS; acquiring channel state information about a full antenna port on the basis of the channel state for the partial antenna port; and reporting the channel state information about the full antenna port to the base station.

## Description

### [Technical Field]

The disclosure relates to a method and an apparatus for predicting channels in a wireless communication system. More specifically, the disclosure relates to a method and an apparatus for artificial intelligence (AI)-based spatial-domain channel prediction for reducing the overhead of a channel state information-reference signal (CSI-RS) and a sounding reference signal (SRS) in a massive multiple-input-multiple-output (MIMO) system. The disclosure relates to a method and an apparatus for measuring (or predicting) channel states for reducing the overhead of reference signals by using AI in a 6G MIMO system.

### [Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobile devices are expected to evolve into various formfactors, such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 µ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multi antenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

### [Disclosure of Invention]

### [Technical Problem]

An aspect of the disclosure is to propose a method for reducing CSI-RS and SRS overhead through spatial-domain channel prediction by using artificial intelligence (AI).

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

An embodiment of the disclosure may provide a method performed by a terminal in a wireless communication system, the method including: receiving information related to a channel state information-reference signal (CSI-RS) from a base station; measuring a partial antenna port CSI-RS transmitted from the base station, based on the information related to the CSI-RS; estimating a channel state for a partial antenna port, based on measurement of the partial antenna port CSI-RS; acquiring channel state information for a full antenna port, based on the channel state for the partial antenna port; and reporting the channel state information for the full antenna port to the base station.

An embodiment of the disclosure may provide a method performed by a base station in a wireless communication system, the method including: transmitting information related to a channel state information-reference signal (CSI-RS) to a terminal; transmitting a partial antenna port CSI-RS to the terminal, based on the information related to the CSI-RS; and receiving channel state information for a full antenna port from the terminal, wherein the channel state information for the full antenna port is acquired based on a channel state for a partial antenna port, measured based on measurement of the partial antenna port CSI-RS.

An embodiment of the disclosure may provide a terminal in a wireless communication system, the terminal including: a transceiver; and a controller, wherein the controller is configured to perform control to: receive information related to a channel state information-reference signal (CSI-RS) from a base station; measure a partial antenna port CSI-RS transmitted from the base station, based on the information related to the CSI-RS; estimate a channel state for a partial antenna port, based on measurement of the partial antenna port CSI-RS; acquire channel state information for a full antenna port, based on the channel state for the partial antenna port; and report the channel state information for the full antenna port to the base station.

An embodiment of the disclosure may provide a base station in a wireless communication system, the base station including: a transceiver; and a controller, wherein the controller is configured to perform control to: transmit information related to a channel state information-reference signal (CSI-RS) to a terminal; transmit a partial antenna port CSI-RS to the terminal, based on the information related to the CSI-RS; and receive channel state information for a full antenna port, wherein the channel state information for the full antenna port is acquired based on a channel state for a partial antenna port, measured based on measurement of the partial antenna port CSI-RS.

### [Advantageous Effects of Invention]

According to an embodiment of the disclosure, a method and an apparatus for improved channel prediction in a wireless communication system may be provided.

According to an embodiment of the disclosure, a method and an apparatus for AI-based spatial-domain channel prediction for reducing the overhead of a CSI-RS or SRS in a multi-antenna technology system may be provided.

According to an embodiment of the disclosure, spatial-domain channel prediction may be performed through a port pattern configuration. This is because the full port channel is estimated through a channel estimated with a small number of ports, and CSI-RS and SRS overhead may thus be reduced. It is possible to solve problems caused by an increase in the number of antenna ports in a 5G massive MIMO system or a future 6G X-MIMO system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a diagram illustrating the concept of spatial-domain channel prediction using AI in order to reduce CSI-RS overhead, which is applied to various embodiments of the disclosure.
FIG. 2 is a diagram illustrating an example in which an AI is utilized in a one-sided AI model to which various embodiments of the disclosure are applied.
FIG. 3 is a diagram illustrating an example in which an AI is utilized in a two-sided AI model applied to various embodiments of the disclosure.
FIG. 4 is a diagram for describing the relationship between a base station and a UE in an AI-based spatial domain channel estimation process according to an embodiment of the disclosure.
FIG. 5 is a diagram for describing a procedure of a UE in the process of AI-based spatial domain channel estimation according to an embodiment of the disclosure.
FIG. 6 is a diagram for describing a procedure of a base station in a process of AI-based spatial domain channel estimation according to an embodiment of the disclosure.
FIG. 7 is an example of a guideline for expressing a port pattern as a bitmap according to an embodiment of the disclosure, and an example of a port pattern and a bitmap expressed according to the guideline.
FIG. 8A illustrates an example of a port pattern according to a port reduction rate per the number of ports in an embodiment of the disclosure.
FIG. 8B illustrates an example of a port pattern according to a port reduction rate per the number of ports in an embodiment of the disclosure.
FIG. 8C illustrates an example of a port pattern according to a port reduction rate per the number of ports in an embodiment of the disclosure.
FIG. 8D illustrates an example of a port pattern according to a port reduction rate per the number of ports in an embodiment of the disclosure.
FIG. 8E illustrates an example of a port pattern according to a port reduction rate per the number of ports in an embodiment of the disclosure.
FIG. 8F illustrates an example of a port pattern according to a port reduction rate per the number of ports in an embodiment of the disclosure.
FIG. 8G illustrates an example of a port pattern according to a port reduction rate per the number of ports in an embodiment of the disclosure.
FIG. 8H illustrates an example of a port pattern according to a port reduction rate per the number of ports in an embodiment of the disclosure.
FIG. 9 is a diagram illustrating a CSI-RS-based spatial domain channel prediction method between a UE and a base station according to an embodiment of the disclosure.
FIG. 10 illustrates a CSI-RS-based spatial domain channel prediction method of a UE according to an embodiment of the disclosure.
FIG. 11 illustrates a CSI-RS-based spatial domain channel prediction method of a base station according to an embodiment of the disclosure.
FIG. 12 is a diagram illustrating a transmit antenna switching (TAS) technology related to an SRS according to an embodiment of the disclosure.
FIG. 13 is a diagram illustrating a method for SRS-based spatial domain channel prediction between a UE and a base station according to an embodiment of the disclosure.
FIG. 14 is a diagram illustrating an SRS-based spatial domain channel prediction method of a UE according to an embodiment of the disclosure.
FIG. 15 is a diagram illustrating an SRS-based spatial domain channel prediction method of a base station according to an embodiment of the disclosure.
FIG. 16 illustrates a structure of a UE according to an embodiment of the disclosure.
FIG. 17 illustrates a structure of a base station according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in an embodiment of the disclosure, it will be understood that the singular expressions "a", "an", and "the" includes plural expressions unless the context clearly indicates otherwise. As used in an embodiment of the disclosure, the terms including an ordinal number, such as "a first" and "a second" may be used to described various elements, but the corresponding elements should not be limited by such terms. The above terms are used merely for the purpose of distinguishing one element from other elements. For example, a first element may be termed a second element, and similarly, a second element may be termed a first element without departing from the scope of protection of the disclosure. As used in an embodiment of the disclosure, the term "and/or" includes any one or combinations of a plurality of relevant items enumerated.

The terms as used in an embodiment of the disclosure are merely used to describe specific embodiments, and are not intended to limit the disclosure. A singular expression may include a plural expression unless they are definitely different in a context. As used herein, the expression "include" or "have" is intended to specify the existence of mentioned features, numbers, steps, operations, elements, components, or combinations thereof, and should be construed as not precluding the possible existence or addition of one or more other features, numbers, steps, operations, elements, components, or combinations thereof. Also, as used in an embodiment of the disclosure, the phrase "associated with" and "associated therebetween", as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. The term "report" may be used as the same meaning as "transmit".

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors. In the following description, the term "a/b" may be understood as at least one of a and b.

An "antenna port" used in an embodiment of the disclosure may refer to, for example, an antenna port, a port, or the like, which may be interchangeably used. For example, a partial port may have the same meaning as a partial antenna port, but is not limited thereto. The term "estimation" used in the disclosure may refer to a process of identifying the channel state of a specific antenna port. In addition, the term "prediction" used in the disclosure may refer to a process of deriving a full antenna port from a partial antenna port. However, "estimation" or "prediction" may be terms that are interchangeable with each other, and the above definitions are not limiting. In addition, "channel estimation" in the disclosure may be have the same meaning as "channel state estimation," and "channel prediction" may be have the same meaning as "channel state prediction,"

In the disclosure, a CSI-RS is used as an example of a reference signal for downlink channel measurement in an embodiment of the disclosure, and an SRS is used as an example of a reference signal for uplink channel measurement. However, the scope of the present disclosure is not limited thereto, and may also be applied to reference signals of other communication systems having technical backgrounds or channel types similar to those of LTE, LTE-A, NR, or 6G.

In the following description of various embodiments of the disclosure, systems based on LTE, LTE-A, NR, or 6G will be described by way of example, but various embodiments of the disclosure may also be applied to other communication systems having similar technical backgrounds or channel types. Moreover, based on determinations by those skilled in the art, various embodiments of the disclosure may also be applied to other communication systems through some modifications without significantly departing from the scope of the embodiments of the disclosure.

Wireless communication technology has been developed in various ways to provide faster data rates, enhanced application ranges, and more stable connections. In particular, in connection with the physical layer, a multi-antenna technology for increasing the number of transmission and reception antennas to obtain a performance gain has been actively developed. Accordingly, the 5G new radio (NR) system supports up to 32 antenna ports. Therefore, base stations and UEs have estimated downlink (DL) and uplink (UL) channels through transmission/reception of a channel state information-reference signal (CSI-RS) and a sounding reference signal (SRS) corresponding to a maximum of 32 ports.

Downlink channel measurement through a CSI-RS in a 5G system is as follows: a UE may report the number of spatial dimensions (rank indicator (RI)) regarding a channel estimated through a CSI-RS transmitted by a base station, a precoding matrix indicator (PMI), channel state information (channel quality indicator (CQI)), and the like to the base station. In this CSI reporting process, the UE utilizes a channel corresponding to a CSI-RS port configured by the base station among the number of CSI-RS ports supported in NR. The number of CSI-RS ports supported in NR may be 2, 4, 8, 16, or 32. The main purpose of UL channel estimation through an SRS in a 5G system is to acquire a downlink channel state by the base station through an estimated UL channel in a time division duplexing (TDD) system. The uplink transmission power of the UE is substantially smaller than the downlink transmission power of the base station, and it is difficult to add an RF chain for each UE antenna, so that the UE may switch the transmit antenna to transmit an SRS. This is referred to as transmit antenna switching (TAS).

Meanwhile, there have been active discussions on the upper-mid band as a 6G frequency. Examples of the 6G frequency band, which has been actively discussed as a 6G frequency of late, include 10 GHz and 13 GHz frequencies. In general, as the frequency band increases, a larger number of antennas can be integrated in the same area, and it is thus expected that, if the upper-mid band is used, a larger number of antennas will be used than in the case of NR. In particular, in the next-generation multi-antenna system called extreme MIMO (X-MIMO), up to 256 ports and 2048 antenna elements are considered.

In the case of channel estimation through a CSI-RS described above, the overhead is determined by the number of CSI-RS ports, the density in the frequency domain, and the CSI-RS transmission periodicity in the time domain. Specifically, the larger the number of ports, the higher the density, and the shorter the transmission periodicity, the greater the overhead. It is expected that, in an X-MIMO system, the CSI-RS overhead will increase by 8 times because cases in which the number of ports increases by up to 8 times compared to the existing technology are also considered. In case that the CSI-RS transmission periodicity is 5, the CSI-RS overhead occupies 30.48%, and thus significantly affects the throughput reduction (see [Table 1]). The overhead may refer to the number of resource elements (REs) of a reference signal among all REs. For example, the CSI-RS overhead may refer to the number of REs occupied by a CSI-RS among all REs, and the SRS overhead may refer to a number of REs occupied by an SRS among all REs.

**[Table 1]**

| Density = 1 | | CSI-RS periodicity [slot] | | | |
|---|---|---|---|---|---|
| | | 5 | 10 | 20 | 40 |
| Overhead [%] | 32-port | 3.81 | 1.90 | 0.95 | 0.48 |
| | 128-port | 15.24 | 7.62 | 3.81 | 1.90 |
| | 256-port | 30.48 | 15.24 | 7.62 | 3.81 |

In case that the CSI-RS periodicity is configured to be long in order to reduce the CSI-RS overhead, a channel aging effect may significantly occur as a trade-off, thereby causing a throughput reduction. Furthermore, in the case of UL channel estimation through an SRS, as the number of ports increases, the transmission power in the UE proportionally decreases, and this may result in a reduction in system throughput due to degraded channel estimation performance, and coverage insufficiency.

The disclosure relates to a method of reducing CSI-RS and SRS overhead through spatial domain channel prediction by using artificial intelligence (AI). Particularly, signaling for spatial domain channel prediction between the base station and the UE is to be defined. Hereinafter, detailed methods for solving the problem of the increased CSI-RS or SRS overhead according to the increase in the number of ports will be disclosed.

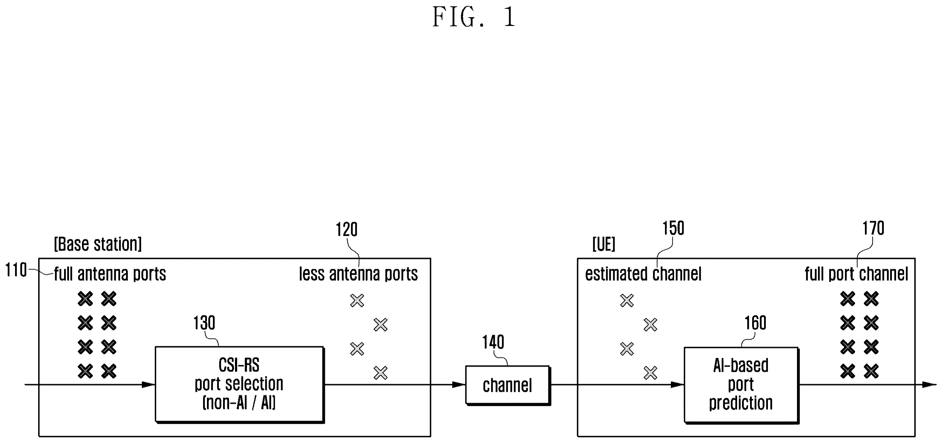

FIG. 1 is a diagram illustrating the concept of spatial-domain channel prediction using AI in order to reduce the overhead of a CSI-RS applicable to various embodiments of the disclosure.

Referring to FIG. 1, the base station may select partial antenna ports 120 from full antenna ports 110 through a CSI-RS port selection 130 procedure. The CSI-RS port selection 130 may be a procedure of selecting partial antenna ports 120 from full antenna ports 110. Full antenna ports 110 may be antenna ports regarding which the base station wants to receive channel state information, and partial antenna ports 120 may be parts of the full antenna ports. In addition, CSI-RS port selection may also be a procedure of selecting partial antenna ports 120 from full antenna ports 110 by using AI. Based on the CSI-RS port selection, the base station may transmit a CSI-RS corresponding to partial antenna ports 120 to the UE 140. The base station may provide the UE with CSI-RS configuration information based on CSI-RS port selection, may transmit a CSI-RS corresponding to partial antenna ports to the UE, based on the CSI-RS configuration information.

The UE may receive (or measure) a CSI-RS corresponding to partial antenna ports 120 from the base station, and may estimate a partial antenna port channel 150, based thereon. Estimating a channel may mean estimating a channel state, based on a measured reference signal. This is a concept applied to various embodiments of the disclosure. Based on the estimated partial antenna port channel 150, the UE may predict a full antenna port channel 170 (160). Predicting a channel may mean predicting a channel state. This concept is applied to various embodiments of the disclosure. The procedure 160 in which the UE predicts the full antenna port channel 170, based on the estimated partial antenna port channel 150, may use AI.

As described above, AI may be used only in the UE, or may be used in both the UE and the base station in the disclosure. In case that AI is used only in the UE, this may be referred to as a one-sided AI model. In addition, in case that AI is used in both the UE and the base station, this may be referred to as a two-sided AI model.

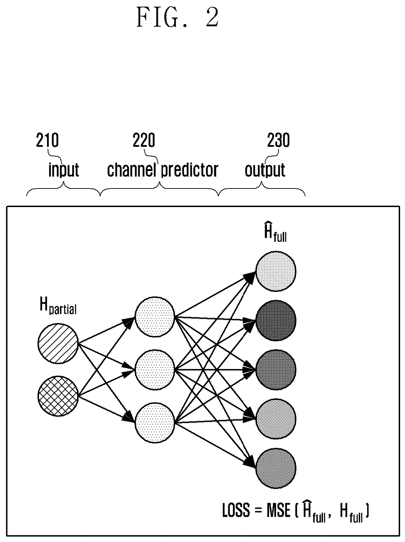

FIG. 2 is a diagram illustrating an example in which AI is utilized in a one-sided AI model to which various embodiments of the disclosure are applied.

Referring to FIG. 2, the one-sided AI model may include an input 210, an output 230, and a channel predictor 220. In case that spatial domain channel prediction is performed by using the one-sided AI model, selection of partial antenna ports may have been performed at the base station without using AI. In the one-sided AI model, the input 210 may be, for example, a partial antenna port channel (a channel measured based on partial antenna ports) or *Hₚₐᵣₜᵢₐₗ*. The partial antenna ports may be partial antenna ports selected without using the AI in the base station. The output 230 in the one-sided AI model may be obtained through a channel predictor 220 from the input 210. The channel predictor 220 may be AI trained to predict the full antenna port channel state from a partial antenna port channel. The output 230 of the one-sided AI model may be, for example, a full antenna port channel or *Ĥ_{full}*. The UE may transmit a channel state information (CSI) report regarding the full antenna port channel to the base station. The CSI report transmitted to the base station may include information regarding the full antenna port channel state. For example, the information regarding the full antenna port channel state may include at least one of the number of spatial dimensions (rank indicator (RI)), a precoding matrix indicator (PMI), and channel state information (channel quality indicator (CQI)).

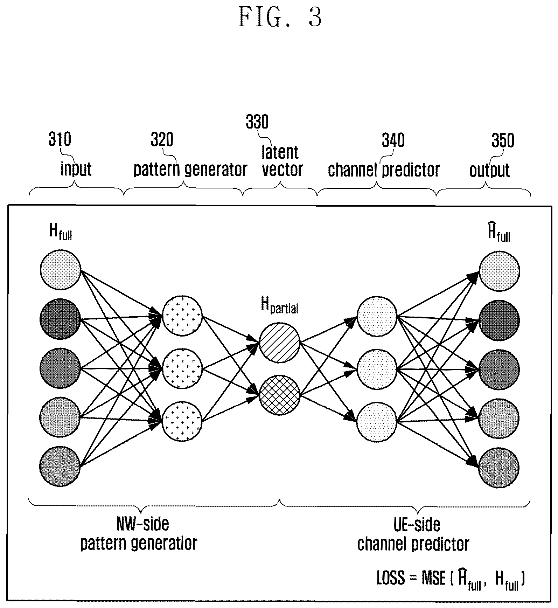

FIG. 3 illustrates an example in which an AI is utilized in a two-sided AI model to which various embodiments of the disclosure are applied.

Referring to FIG. 3, the two-sided AI model may be divided into a network side and a UE side. Once the training is completed, the AI model on the network side may be used as a port pattern generator by the base station, and the AI model on the UE side may be used as a spatial domain channel predictor by the UE.

The two-sided AI model may include an input 310, a pattern generator 320, a latent vector 330, a channel predictor 340, and an output 350. The input 310 in the two-sided AI model may be, for example, a full antenna port. The latent vector 330 in the two-sided AI model may be a partial antenna port or a partial antenna port channel. The latent vector 330 of the two-sided AI model may be obtained through the pattern generator 320 from the input 310. The pattern generator 320 in the two-sided AI model may be AI trained to select partial antenna ports from full antenna ports. The output 350 of the bi-directional AI model may be, for example, a full antenna port channel. In addition, the output 350 of the two-sided AI model may be obtained through the channel predictor 340 from the latent vector 330. The channel predictor 340 of the bi-directional AI model may be AI trained to appropriately predict a full antenna port channel from a partial antenna port channel. The UE may transmit a CSI report regarding the full antenna port channel to the base station. The CSI report transmitted to the base station may include information regarding the full antenna port channel state acquired from the output 350. The information regarding the full antenna port channel state may include at least one of the number of spatial dimensions (rank indicator (RI)), a precoding matrix indicator (PMI), and channel state information (channel quality indicator (CQI)).

When spatial domain channel prediction is performed through the one-sided AI model and the two-sided AI model, the port pattern between the base station and the UE may need to be aligned. Such a port pattern may be considered according to base station designation, UE capability information-based designation, etc. In addition, the port pattern regarding the transmit antenna must be aligned in the SRS as well.

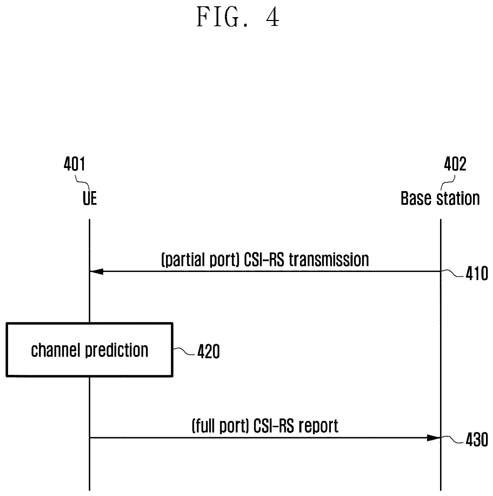

FIG. 4 is a diagram for describing the relationship between a base station and a UE in an AI-based spatial domain channel estimation process according to an embodiment of the disclosure.

Referring to FIG. 4, in step 410, the base station 402 may transmit a CSI-RS to the UE 401. The CSI-RS may be a CSI-RS based on partial antenna ports. The CSI-RS based on partial antenna ports may be referred to as a partial antenna port channel state information reference signal. The base station 402 may select partial antenna ports from full antenna ports. The number of partial antenna ports may be smaller than the number of full antenna ports, and some of the full antenna ports may be selected as partial antenna ports. Full antenna ports may be antenna ports regarding which the base station 402 wants to receive channel state information, and partial antenna ports may be parts of the full antenna ports. The base station 402 may select partial antenna ports from full antenna ports, and may transmit a CSI-RS corresponding to partial antenna ports to the UE 401. The base station 402 may use AI in the process of selecting partial antenna ports from full antenna ports, or may not use AI. In case that the base station 402 uses AI in the process of selecting partial antenna ports from full antenna ports, the AI may be, for example, a pattern generator 320, but is not limited thereto. The number of full antenna ports may be equal to or smaller than the number of full antenna ports used for reference signal transmission. For example, in case that the base station 402 may use N antenna ports for reference signal transmission, the number of full antenna ports may be equal to or less than N. Full antenna ports may be full antenna ports for channel state information estimation. For example, in case that channel state information regarding M antenna ports among N antenna ports is to be acquired, antenna ports configured by M (M <= N) antenna ports may be full antenna ports. Partial antenna ports may be parts of the full antenna ports for estimating channel state information of full antenna ports. For example, partial antenna ports for estimating channel state information regarding M full antenna ports may include L antenna ports (M>L). Full antenna ports may be defined as a first antenna port set or a first antenna port group. In addition, partial antenna ports may be defined as a second antenna port set or a second antenna port group. These various definitions and concepts of full antenna ports and partial antenna ports may be similarly applied to various embodiments of the disclosure as well as to the embodiment in FIG. 4.

Meanwhile, before step 410, the base station 402 may provide the UE 401 with information related to the CSI-RS. The CSI-RS information may include configuration information regarding the partial antenna port CSI-RS, and may include resource information of the partial antenna port CSI-RS. In addition, the information related to the CSI-RS may include information regarding the full antenna port to be predicted through the resource information of the partial antenna port CSI-RS. The information regarding the full antenna port may include at least one of the antenna port number of the full antenna port, CSI-RS resources of the full antenna port, antenna pattern information, or the relationship between the partial antenna port and the full antenna port. Above pieces of information may be provided to the UE 401 in one piece of control information, or may be provided to the UE 401 through different pieces of control information.

In step 420, the UE 401 may predict (or estimate) channel states. The channel states may be space-domain channel states. The UE 401 may predict channel states regarding full antenna ports, based on channel state measurement regarding partial antenna ports. The UE 401 may measure CSI-RSs regarding partial antenna ports transmitted from the base station 402. The UE 401 may estimate channel states regarding partial antenna ports, based on CSI-RS measurement regarding partial antenna ports. Thereafter, the UE 401 may predict channel states regarding full antenna ports, based on estimated channel states regarding the partial antenna ports. For example, the UE 401 may predict channel states regarding M full antenna ports, based on channel states acquired based on CSI-RS measurement regarding L partial antenna ports. The process of predicting full antenna port channel states may be defined as a spatial domain channel prediction process. AI may be used in the full antenna port channel prediction process. The AI used in this regard may be, for example, a channel predictor 220 or 340, but is not limited thereto. Channel state information regarding full antenna ports may be acquired based on artificial intelligence training results and channel states regarding partial antenna ports.

In step 430, the UE 401 may report channel state information (CSI) to the base station 402. The channel state information may be channel state information regarding full antenna ports. The channel state information regarding full antenna ports may be channel state information predicted (or estimated) from channel states estimated with regard to partial antenna ports. The channel state information regarding full antenna ports may include at least one of the number of spatial dimensions (rank indicator (RI)), a precoding matrix indicator (PMI), and channel state information (channel quality indicator (CQI)). According to an embodiment, in case that the base station 402 has a request or in case that a preconfigured reporting condition is satisfied, the UE 401 may transmit the channel state information regarding full antenna ports to the base station 402.

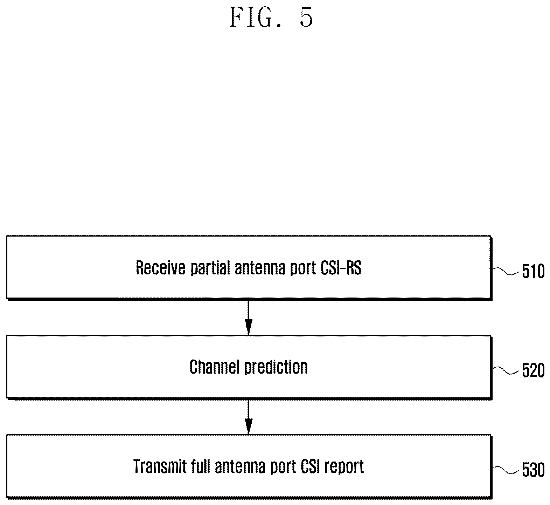

FIG. 5 is a diagram for describing a procedure of a UE in the process of AI-based spatial domain channel estimation according to an embodiment of the disclosure.

The content in FIG. 5 may be related to the description of the relationship between the UE and the base station in the spatial domain channel estimation process in FIG. 4. That is, the content in FIG. 5 may be related to the content in FIG. 4. Operations or content omitted in FIG. 5 may be referred to the corresponding configurations in FIG. 4.

Referring to FIG. 5, in step 510, the UE may measure a CSI-RS transmitted from the base station. The CSI-RS may be a CSI-RS corresponding to partial antenna ports. Prior to step 510, the UE may receive information related to the CSI-RS from the base station. The UE may perform CSI-RS measurement regarding partial antenna ports, based on information related to the CSI-RS, and a channel prediction operation regarding full antenna ports (described later).

In operation 520, the UE may predict (or estimate) channel states. The channel states may be space-domain channel states. The UE may predict channel states regarding full antenna ports, based on channel state measurement regarding partial antenna ports. The UE may measure CSI-RSs regarding partial antenna ports transmitted from the base station. The UE may estimate channel states regarding partial antenna ports, based on CSI-RS measurement regarding partial antenna ports. Subsequently, the UE may predict channel states regarding full antenna ports, based on estimated channel states regarding partial antenna ports. For example, the UE may predict channel states regarding M full antenna ports, based on channel states acquired based on CSI-RS measurement regarding L partial antenna ports. The process of predicting full antenna port channel states may be defined as a spatial domain channel prediction process. AI may be used in the full antenna port channel prediction process. The AI used in this regard may be, for example, a channel predictor 220 or 340, but is not limited thereto.

In step 530, the UE may report CSI to the base station. The channel state information may be channel state information regarding full antenna ports. The channel state information regarding full antenna port may be channel state information predicted from channel states estimated with regard to partial antenna ports. The channel state information regarding full antenna ports may include at least one of the number of spatial dimensions (rank indicator (RI)), a precoding matrix indicator (PMI), and channel state information (channel quality indicator (CQI)). According to an embodiment, in case that the base station has a request or in case that a preconfigured reporting condition is satisfied, the UE may transmit the channel state information regarding full antenna ports to the base station.

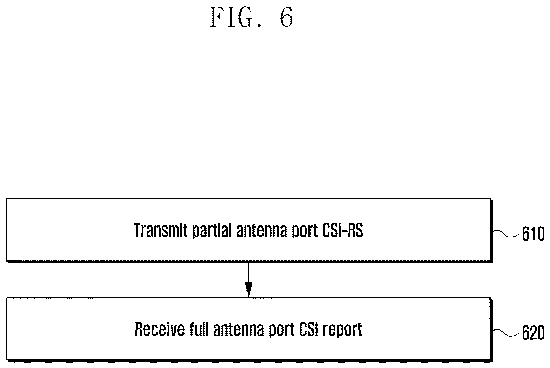

FIG. 6 is a diagram for describing a procedure of a base station in a process of AI-based spatial domain channel estimation according to an embodiment of the disclosure.

The content in FIG. 6 may be related to the description of the relationship between the UE and the base station in the spatial domain channel estimation process in FIG. 4. That is, the content in FIG. 6 may be related to the content in FIG. 4. Operations or content omitted in FIG. 6 may be referred to the corresponding configurations in FIG. 4.

In step 610, the base station may transmit a CSI-RS to the UE. The CSI-RS may be a CSI-RS based on partial antenna ports. The base station may select partial antenna ports from full antenna ports. The number of partial antenna ports may be smaller than the number of full antenna ports, and some of the partial antenna ports may be selected as partial antenna ports. The base station may select partial antenna ports from full antenna ports, and may transmit a CSI-RS corresponding to the partial antenna ports to the UE. The base station may use AI in the process of selecting partial antenna ports from full antenna ports, and may not use AI. In case that the base station uses AI in the process of selecting partial antenna ports from full antenna ports, the AI may be a pattern generator 320, for example, but is not limited thereto. The number of full antenna ports may be equal to or smaller than the number of full antenna ports used for reference signal transmission. For example, in case that the base station may use N antenna ports for reference signal transmission, the number of full antenna ports may be equal to or smaller than N. Full antenna ports may be full antenna ports for estimating channel state information. For example, in case that channel state information regarding M antenna ports among N antenna ports is to be acquired, antenna ports configured by M (M<=N) antenna ports may be full antenna ports. Partial antenna ports may be parts of the full antenna ports for estimating channel state information of full antenna ports. For example, partial antenna ports for estimating channel state information regarding M full antenna ports may be configured by L (M > L) antenna ports. Full antenna ports may be defined as a first antenna port set or a first antenna port group. In addition, partial antenna ports may be defined as a second antenna port set or a second antenna port group. The various definitions and concepts of full antenna ports and partial antenna ports as described above may be similarly applied to various embodiments of the disclosure as well as to the embodiment in FIG. 6.

Meanwhile, before step 610, the base station may provide (or transmit) the UE with information related to the CSI-RS. The CSI-RS information may include configuration information regarding the partial antenna port CSI-RS, and may include resource information of the partial antenna port CSI-RS. In addition, the information related to the CSI-RS may include information regarding the full antenna port to be predicted through the resource information of the partial antenna port CSI-RS. The information regarding the full antenna port may include at least one of the antenna port number of the full antenna port, CSI-RS resources of the full antenna port, antenna pattern information, or the relationship between the partial antenna port and the full antenna port. Above pieces of information may be provided to the UE in one piece of control information, or may be provided to the UE through different pieces of control information.

In operation 620, the base station may receive channel state information (CSI) from the UE. The channel state information may be channel state information regarding full antenna ports. The channel state information regarding full antenna ports may be channel state information predicted from channel states estimated with regard to partial antenna ports. In addition, the channel state information regarding full antenna ports may be acquired based on channel states regarding partial antenna ports measured based on measurement of the partial antenna port channel state information reference signal. The channel state information regarding full antenna ports may include at least one of the number of spatial dimensions (rank indicator (RI)), a precoding matrix indicator (PMI), and channel state information (channel quality indicator (CQI)).

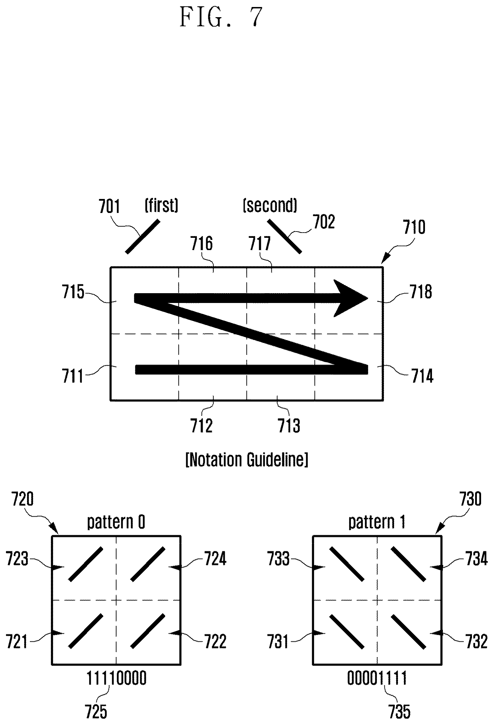

FIG. 7 is an example of a guideline for expressing a port pattern as a bitmap, and an example of the port pattern and the bitmap expressed according to the guideline.

710 is an example of a guideline for expressing a port pattern as a bitmap. 701 and 702 are components that shape a port pattern. Component 701 may be defined as a first pattern, and component 702 may be defined as a second pattern. This is an arbitrary pattern definition intended only to distinguish patterns, and names of patterns are not limited to this. Reference numerals 711, 712, 713, 714, 715, 716, 717, and 718 indicate areas in which an antenna port may be configured. At least one of the first pattern 701 or the second pattern 702 may be configured in each area, or none of the first pattern 701 and the second pattern 702 may be configured therein. The order indicated by the arrow in reference numeral 710 describes the order of reading each area in case that the port pattern is expressed as a bitmap. For example, port patterns configured in respective areas may be identified in the order of 711 -> 712 -> 713 -> 714 -> 715 -> 716 -> 717 -> 718, and a bitmap may be configured accordingly. However, this example of order is only intended to describe a method of configuring a bitmap in an embodiment of the disclosure, and the method of configuring a bitmap in various embodiments of the disclosure is not limited thereto, and respective areas may be read in various orders.

According to guideline 710, bitmap-generating entities may identify the presence/absence of the first pattern 701 and/or the second pattern 702 in respective areas according to a predefined order, thereby generating a bitmap. If the first pattern 701 is present in each area, 1 may be written, and if the first pattern 701 is not present, 0 may be written, according to the predefined order. After identifying the first pattern 701, the existence/absence of the second pattern 702 may be identified again in the predefined order, and 1 may be written if the second pattern 702 exists in each area, and 0 may be written if the second pattern 702 does not exist. Meanwhile, although it is assumed in the description of the embodiment in FIG. 7 that the first pattern 701 is identified first according to a predefined order, and then the second pattern 702 is identified to configure a bitmap, this is for convenience of description, and the bitmap configuration method in the various embodiments of the disclosure is not limited thereto. For example, the order of reading the areas may be changed, the order of reading the first pattern 701 and the second pattern 702 may be changed, and all of the first pattern 701 and the second pattern 702 may be identified in each area, and then in the next area, thereby configuring a bitmap.

720 is an example in which port pattern 0 is expressed as a bitmap 725 according to guideline 710. According to guideline 710, "1" may be written if the first pattern 701 exists, and "0" may be written if the first pattern does not exist, in the order of the areas 721 -> 722 -> 723 - > 724. Thereafter, "1" may be written if the second pattern 702 exists, and "0" may be written second pattern 702 does not exist, in the order of areas 721 -> 722 -> 723 -> 724. Port pattern 0 720 includes the first pattern 701 in all of areas 721, 722, 723, and 724, and does not include the second pattern 702 in all of the areas 721, 722, 723, and 724. Therefore, if port pattern 0 720 is expressed by a bitmap, "1111" may be described according to the first pattern 701, and "0000" may be described according to the second pattern 702. That is, port pattern 0 720 may be expressed by bitmap "11110000" 725.

730 is an example in which port pattern 1 is expressed as a bitmap 735 according to guideline 710. In accordance with guideline 710, "1" may be written if the first pattern 701 exists, and "0" may be written if the first pattern 701 does not exist, in the order of areas 721 → 722 → 723 → 724. Thereafter, "1" may be written if the second pattern 702 exists, and "0" may be written if the second pattern 702 does not exist, in the order of the areas 721 -> 722 -> 723 -> 724. Port pattern 1 730 includes no first pattern 701 in all of areas 721, 722, 723, and 724, and includes the second pattern 702 in all of areas 721, 722, 723, and 724. Therefore, if port pattern 1 730 is expressed as a bitmap, "0000" may be written according to the first pattern 701, and "1111" may be written according to the second pattern 702. That is, port pattern 1 730 may be expressed by bitmap "00001111" 735.

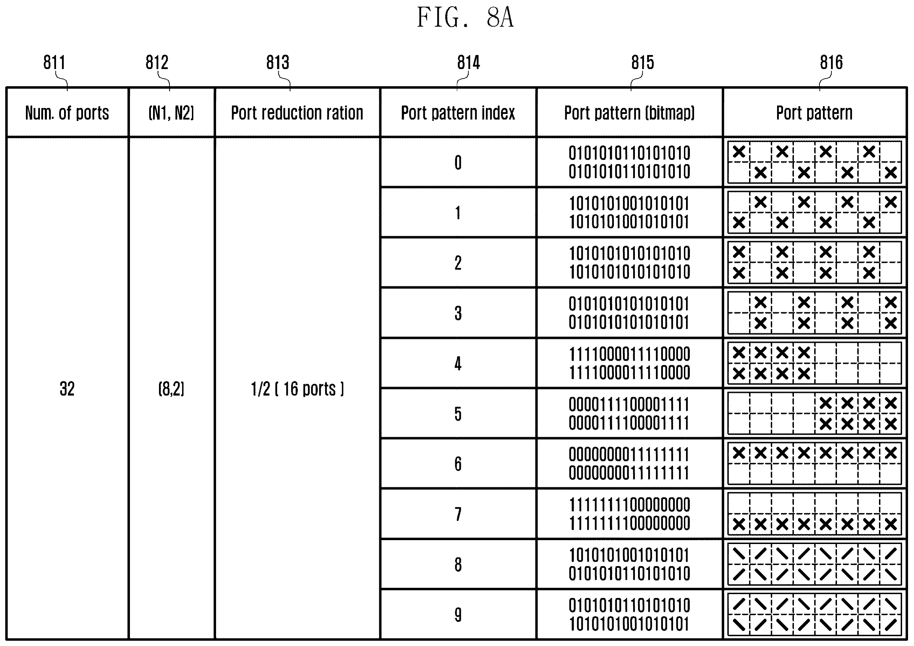

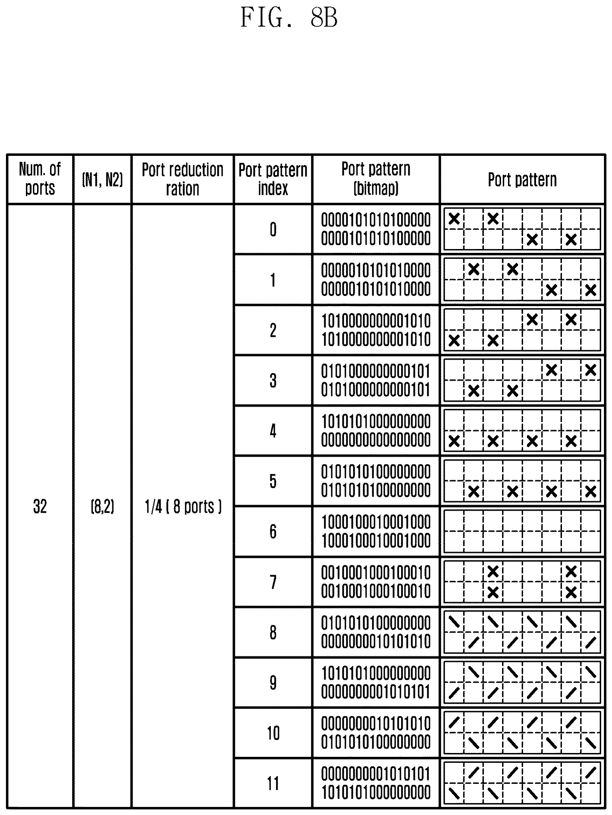

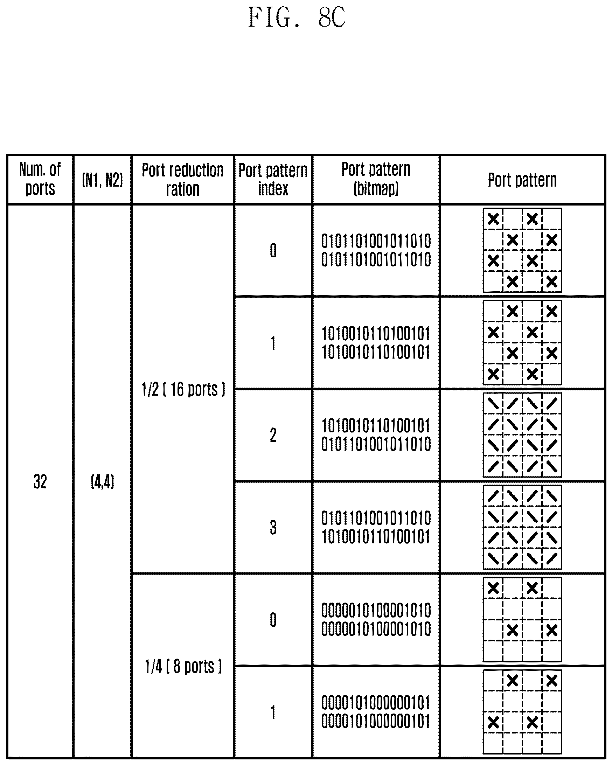

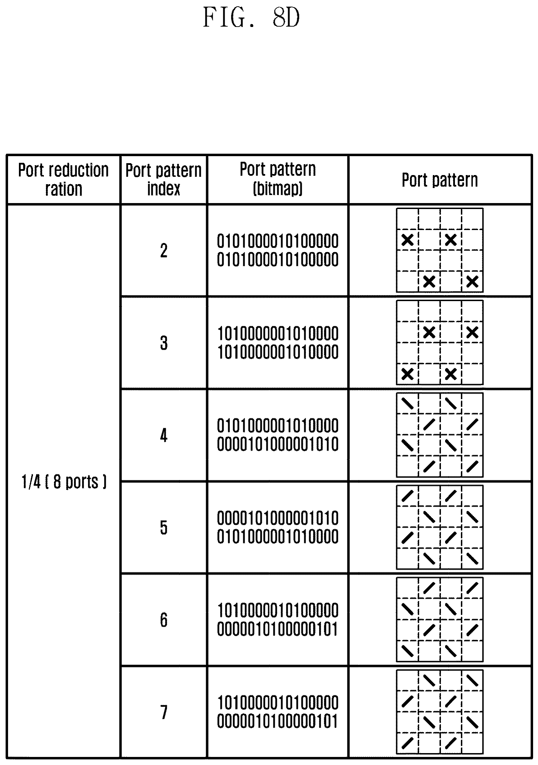

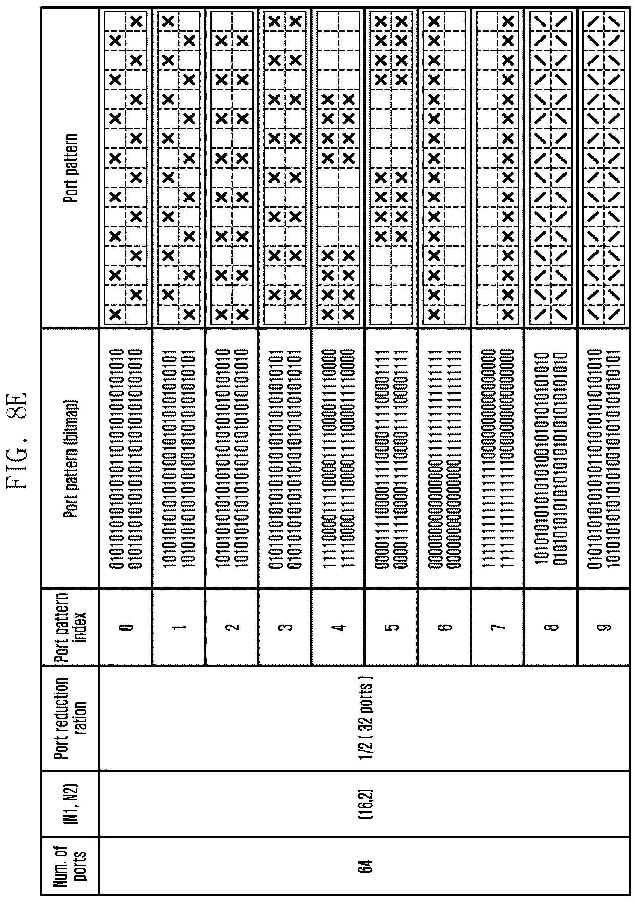

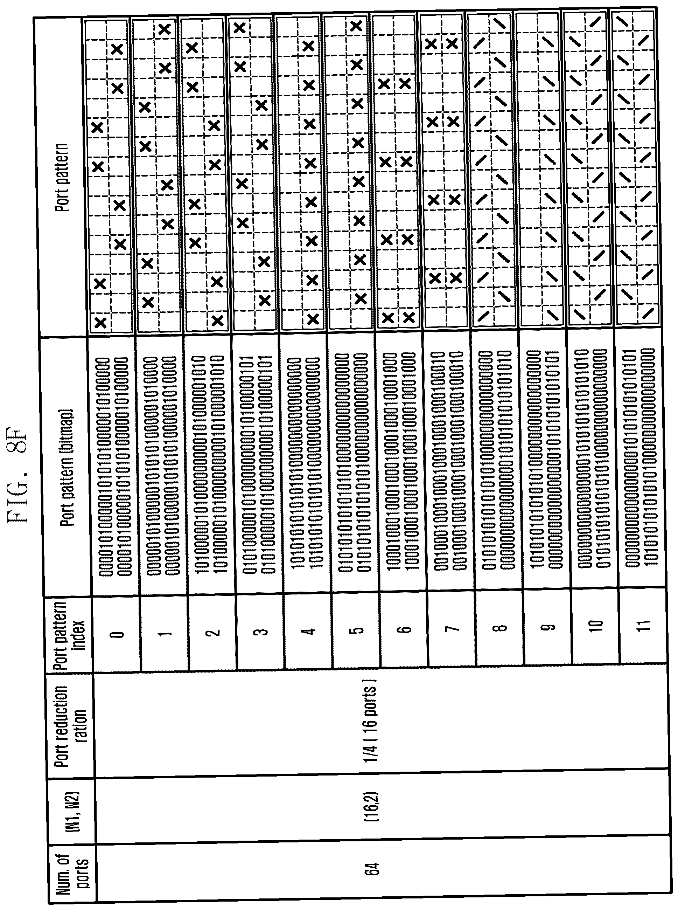

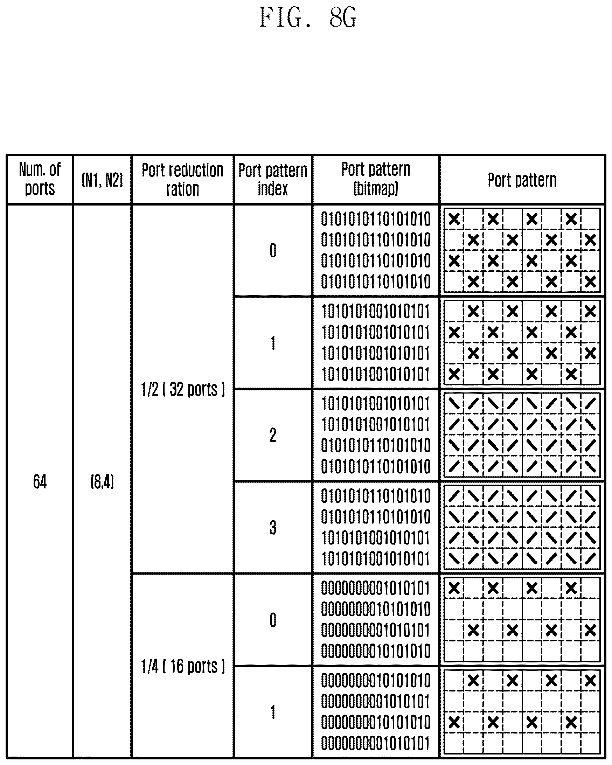

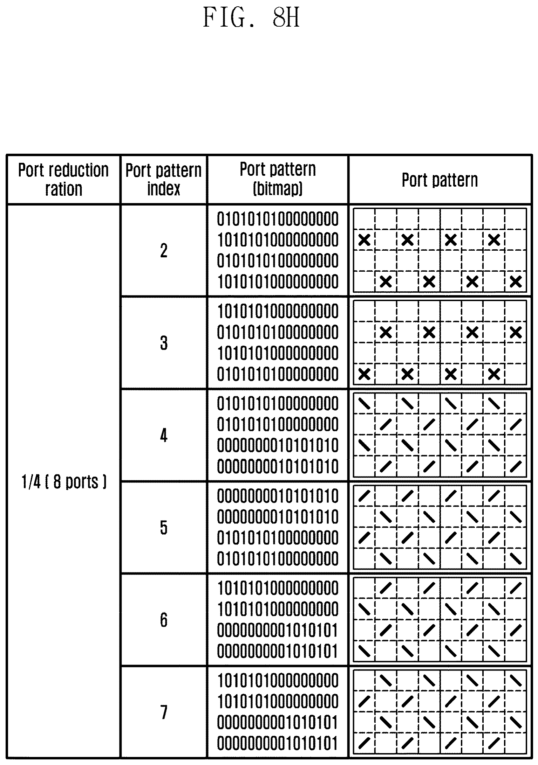

FIG. 8A, FIG. 8B, FIG. 8C, FIG. 8D, FIG. 8E, FIG. 8F, FIG. 8G, and FIG. 8H illustrate examples of port patterns according to the port reduction ratio per the number of ports in an embodiment of the disclosure.

In FIG. 8A "Num. of ports" denotes the number of ports. The Num. of ports may denote the number of ports of a full antenna port. For example, "Num. of ports 32" may mean that the number of ports of a full antenna port is 32. In FIG. 8A, N1 denotes the size of one side surface in a virtual antenna port shape, and N2 denotes the size of the other side surface in the virtual antenna port shape. The surface size "1 by 1" refers to one area in which the antenna pattern described in FIG. 7 may be configured. For example, a configuration "8 by 2" as in FIG. 8A may mean that 16 port pattern areas are configured, and the specific shape refers to the port pattern 816. N1 may be described as being greater than or equal to N2, but N2 may also be described as being greater than or equal to N1. The port reduction ratio 813 in FIG. 8A denotes the number of partial antenna ports compared to the number of full antenna ports. Port reduction ratio "1/2" means that the number of full antenna ports is 32, and the number of partial antenna ports is 16, and in case of operating according to an embodiment of the disclosure, the channel regarding 32 full antenna ports may be predicted (estimated) with16 partial antenna ports. The port pattern index 814 in FIG. 8A refers to an index for indicating a port pattern 816. Different port patterns may be indicated according to the index. The corresponding port pattern (bitmap) 815 or port pattern 816 may be identified according to the port pattern index. A corresponding port pattern may be defined according to the port pattern index 814. The port pattern (bitmap) 815 in FIG. 8A is a port pattern expressed as a bitmap according to the guideline in FIG. 8A. The port pattern in FIG. 8A may be an example in which the pattern of a virtual antenna port is shaped according to the standard. The description regarding FIG. 8A is also applicable to FIG. 8B, FIG. 8C, FIG. 8D, FIG. 8E, FIG. 8F, FIG. 8G, and FIG. 8H.

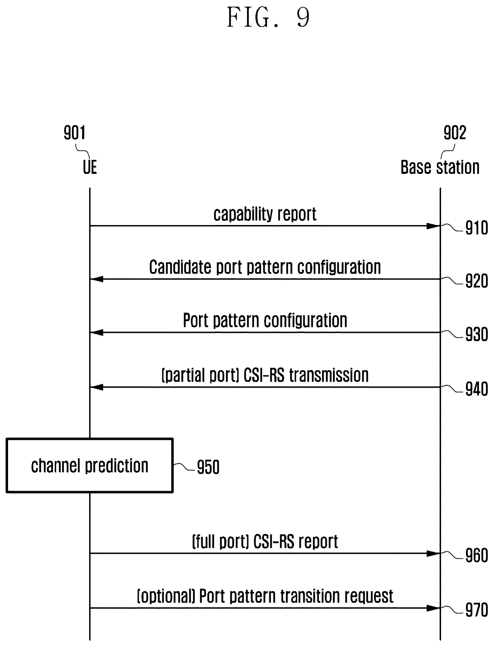

FIG. 9 is a diagram illustrating a CSI-RS-based spatial domain channel prediction method between a UE and a base station according to an embodiment of the disclosure.

Referring to FIG. 9, in step 910, the UE 901 may transmit capability information to the base station 902. The capability information may be defined as performance information. The UE 901 may transmit capability information to the base station 902 by using a capability report. The capability report may include a UE capability information report. The capability report may include capability information related to spatial domain channel prediction. The UE 901 may report UE capability information in case that there is a reporting request from the base station 902. The base station 902 may select a partial antenna port from a full antenna port, based on the capability report received from the UE 901. This selection process may be defined as a port selection process. The base station 902 may configure a partial antenna port through the port selection process, and the port pattern may vary according to the type of the configured partial antenna port. In addition, the UE 901 may later perform a subsequent spatial domain channel prediction process with regard to a given port pattern, thereby predicting the channel of the full antenna port CSI-RS. The full antenna port may be an antenna port regarding which the base station 902 wants to receive channel state information, and the partial antenna port may be a part of the full antenna port.

The information of the capability report transmitted by the UE 901 to the base station 902 may differ depending on whether the UE 901 uses its own spatial domain channel prediction AI model or the base station 902 transmits a spatial domain channel prediction AI model to the UE 901.

a) In case that the UE 901 uses its own AI model for spatial domain channel prediction, the UE 901 may transmit self-trained port pattern-related information to the base station 902 in the process of transmitting a capability report before performing spatial domain channel prediction to the base station 902. The port pattern-related information may include information for identifying the port pattern, and may include, for example, a port pattern index trained by the UE 901, but is not limited thereto. Information transmitted from the UE 901 to the base station 902 may be defined as UE-assisted information. In general, the more the measured ports, the easier to estimate the channel state of the full antenna port, thereby enabling channel prediction with a low level of AI model complexity (e.g., the number of model parameters, the number of FLOPs). In an embodiment of the disclosure, partial antenna ports may be measured ports. The AI model complexity may be related to the number of model parameters and/or floating point operations (FLOPs). Since each UE has different AI-related complexity capability information, the minimum number of measured ports required for full antenna port channel prediction may vary. Since the required minimum measured ports, i.e., partial antenna ports, are different, the port pattern trained internally by the UE 901 may be different. Therefore, in case that the UE uses a self-trained AI model, a procedure for reporting the port pattern internally trained by the UE 901 may be required. The manner in which the port pattern is reported may vary according to whether the same is defined in standards.

For example, in case that a port pattern table such as in FIG. 8A, FIG. 8B, FIG. 8C, FIG. 8D, FIG. 8E, FIG. 8F, FIG. 8G, or FIG. 8H is defined in standards, the UE 901 may transmit indices of the port patterns trained by the UE 901 with regard to each CSI-RS port to the base station 902. The UE 901 may transmit indices of port patterns trained by the UE 901 with the number of ports configured by the base station 902.

The spatial domain channel prediction performance is largely affected by the port pattern, and this may vary according to the site channel environment (e.g., scatter, reflector, etc.) and the vendor's antenna configuration implementation. Therefore, in case that the degree of freedom regarding port pattern design is large, the vendor may operate port patterns in a site-specific or site-common manner. In this case, the UE 901 may transmit a UE-specific port pattern to the base station 902. The UE-specific port pattern may be interpreted as a vendor-specific or site-specific port pattern. When the UE-specific port pattern is used, the UE 901 may report the port pattern as a bitmap as in the example of FIG. 7.

b) In case that the base station 902 transfers a spatial domain channel prediction AI model to the UE 901, the UE 901 may perform spatial domain channel prediction by using the AI model transferred from the base station 902. Such a performing method may be defined as model transfer-based AI model inference-type channel prediction performing. In case of performing model transfer-based AI model inference-type channel prediction, the AI model itself is held by the base station 902. Therefore, the UE 901 may report capability information for driving the AI model to the base station 902. The capability information transmitted by the UE 901 may be AI complexity capability information. The AI complexity capability information of the UE 901 may include at least one of the maximum allowable memory, storage, and computation capability information. For example, the UE 901 may transmit UE-specific allowable complexity, among categorized AI-related UE capability information, to the base station 902. The base station 902 may determine an AI model suitable for the capability information received from the UE 901, and may transmit the determined AI model to the UE 901. The UE 901 may report a port reduction ratio, based on its capability information.

In step 920, the base station 902 may transmit information regarding port patterns to the UE 901. The information regarding port patterns may include information regarding at least one port pattern. The information regarding port patterns may be candidate port pattern-related information. The candidate port pattern-related information may include multiple port patterns determined based on channel prediction-related capability information of the UE 901. The information regarding port patterns may be defined as candidate port pattern configuration, but is not limited thereto. The candidate port pattern configuration information may be transmitted to the UE 901 through a radio resource control (RRC) message. This process may be defined as a process in which the UE 901 receives candidate port pattern-related information through an RRC message. When configuring the candidate port pattern, the base station 902 may consider the UE capability information in step 910. In addition, when configuring the candidate port pattern, the base station 902 may use a standard-defined table or a UE-specific (vendor-specific or site-specific) port pattern.

In case that the base station 902 configures one of standard-defined port patterns, the base station 902 may have received a port pattern index from the UE 901 in step 910. Therefore, the base station 902 may configure the index of patterns to be selectively used among full port patterns and may transmit configuration information to the UE 901. In case that all port patterns corresponding to a specific port number are to be used, an index corresponding to full pattern use may be transmitted to the UE 901. For example, in case that only the number of ports, not the index of a specific port pattern, is indicated, it may understand that the UE 901 and the base station 902 use the full port pattern supporting the corresponding number of ports.

The spatial domain channel prediction performance is greatly affected by the port pattern, which may vary depending on the site channel environment (e.g., scatter, reflector, etc.) and the vendor's antenna configuration implementation. Therefore, in case that the degree of freedom regarding port pattern design is large, the vendor and/or site may operate port patterns in a site-specific or site-common manner. In case that each vendor and/or site uses its own specific pattern, the port pattern to be operated by the base station 902 may be configured in a bitmap format, and candidate port pattern configuration information may be transmitted to the UE 901. The base station 902 may transmit, to the UE 901, not only the candidate port pattern, but also an AI model trained by candidate port patterns. The base station 902 may provide the UE 901 with information regarding the AI model in advance, or may provide the UE 901 with information regarding the AI model together with candidate port pattern configurations.

In step 930, the base station 902 may transmit port pattern configuration-related information to the UE 901. The port pattern configuration-related information may be information indicating a port pattern to be measured by the UE 901 among multiple port patterns. The port pattern-related information may be transmitted to the UE 901 in the form of downlink control information (DCI), a medium access control - control element (MAC CE), or the like. This process may be defined as a process in which the UE 901 receives the port pattern configuration-related information as DCI or a MAC-CE. For example, the port pattern to be measured by the UE 901, among multiple port patterns configured based on the port pattern configuration information, may be indicated through port pattern configuration-related information. The UE 901 may identify the port pattern according to a configured port pattern, and perform AI-related inference. In step 930, one or multiple port patterns may be indicated. In case that one port pattern is used, the corresponding index may be configured. In case that multiple port patterns are used, a port pattern configuration may be performed by configuring all the corresponding indices. Alternatively, multiple port patterns may be indicated by a method of indicating a specific group, a specific number of ports, or a specific ratio.

When a port pattern is configured, additional parameters may be configured. In other words, when configuring multiple port patterns, the port patterns may be used in a mixed manner according to the CSI-RS transmission periodicity and/or the performance monitoring result of the base station 902. In case that port patterns are used in a mixed manner, the UE 901 may use the port channel measured before a port pattern change to predict a new port pattern. Therefore, a performance gain may be obtained in terms of implementation by configuring additional parameters and thus using port patterns in a mixed manner.

For example, a case in which different port patterns are used during odd-numbered CSI-RS transmission and even-numbered CSI-RS transmission may be as in Table 2 below. The numbers in the second row of Table 2 indicate port pattern indices. (1: port pattern 1, 2: port pattern 2)

**[Table 2]**

| First | -> | Second | -> | Third | -> | Fourth | -> | Fifth | -> | Sixth | ... |
|---|---|---|---|---|---|---|---|---|---|---|---|
| 1 | | 2 | | 1 | | 2 | | 1 | | 2 | ... |

In another exemplary case, the influence on the AI inference performance differs for each port pattern. The case in which a dominant pattern that has a large effect on performance is used more frequently than other patterns may be as in [Table 3] below. The numbers in the second row in [Table 3] indicate port pattern numbers. (1: port pattern 1, 2: port pattern 2)

The case in Table 3 is an example in which port pattern 1 is a dominant pattern that has a greater influence on performance than port pattern 2.

**[Table 3]**

| First | -> | Second | -> | Third | -> | Fourth | -> | Fifth | -> | Sixth | ... |
|---|---|---|---|---|---|---|---|---|---|---|---|
| 1 | | 1 | | 1 | | 1 | | 2 | | 1 | ... |

The base station 902 may configure the port pattern to change when a specific event occurs. In addition, the base station 902 may configure the index of the port pattern that changes when a specific event occurs. For example, the base station 902 may configure the port pattern to change when the performance metric is degraded while AI/ML-related life-cycle management (LCM) is performed, and may configure the related port pattern index. As another example, in case that the base station 902 monitors the cell throughout as the performance metric, the base station 902 may configure a port pattern change according to a throughput reduction, and may configure a related port pattern index. As another example, the base station 902 may configure the port pattern to change when the performance of a mean squared error (MSE) between a predicted (or restored) full antenna port channel and a ground-truth full antenna port channel is greater than or equal to a specific threshold value, and may configure a related port pattern index. As another example, the base station 902 may configure a port pattern change for each change when the port pattern is changed and used for each specific location range (e.g., zone 1, zone 2, ...), and whenever the location of the UE 901 is out of the specific location range (e.g., zone 1-> zone 2), and may configure a related port pattern index.

In step 940, the base station 902 may transmit a CSI-RS to the UE 901. The base station 902 may transmit a CSI-RS to the UE 901, based on a port pattern configuration. The base station 902 may transmit a CSI-RS to the UE 901, based on CSI-RS configuration-related information and a port pattern configuration. The CSI-RS may be a CSI-RS based on a partial antenna port. The CSI-RS based on a partial antenna port may be referred to as a partial antenna port channel state information reference signal. The relationship between the full antenna port and the partial antenna port is referred to the description of the embodiment in FIG. 4.

In step 950, the UE 901 may predict (or estimate) a channel state. The channel state may be a spatial-domain channel state. The UE 901 may predict a channel state regarding a full antenna port, based on channel state measurement regarding a partial antenna port. The UE 901 may measure a CSI-RS regarding a partial antenna port transmitted from the base station 902. The UE 901 may estimate a channel state regarding a partial antenna port, based on a CSI-RS measurement regarding a partial antenna port. The UE 901 may then predict a channel state regarding a full antenna port, based on the estimated channel state regarding a partial antenna port. For example, the UE 901 may predict channel states regarding M full antenna ports, based on channel states acquired based on CSI-RS measurement regarding L partial antenna ports. The process of predicting the full antenna port channel state may be defined as a spatial domain channel prediction process. AI may be used in the full antenna port channel prediction process. The AI used in this regard may be, for example, a channel predictor 220 or 340, but is not limited thereto. Channel state information regarding full antenna ports may be acquired based on results of artificial intelligence training performed with regard to candidate port patterns and channel states regarding partial antenna ports.

In operation 960, the UE 901 may report (transmit) channel state information (CSI) to the base station 902. The channel state information may be channel state information regarding full antenna ports. The channel state information regarding full antenna ports may be channel state information predicted (or acquired) from channel states estimated with regard to partial antenna ports. In addition, the channel state information regarding full antenna ports may be acquired based on channel states regarding partial antenna ports measured based on measurement of the partial antenna port channel state information reference signal. The channel state information regarding full antenna ports may include at least one of the number of spatial dimensions (rank indicator (RI)), a precoding matrix indicator (PMI), and channel state information (channel quality indicator (CQI)).

In step 970, the UE 901 may transmit a message requesting a port pattern transition to the base station 902. The UE 901 may measure a full antenna port CSI-RS transmitted from the base station 902 periodically. A channel identified based on the full antenna port CSI-RS measured may be referred to as a ground-truth channel, and a full antenna port channel predicted from a partial antenna port channel may be referred to as a restored full antenna port channel. Channel measurement based on the full antenna port CSI-RS may be performed periodically, or may be performed aperiodically or periodically at the request of the UE 901.

In step 970, the UE 901 may transmit a request signal for requesting a port pattern transition to the base station 902 when a specific event occurs. The request signal transmission step of the UE 901 is an optional step and may be performed as needed. Since the subject who can measure raw channels is the UE 901, there is an advantage in measuring the predicted performance by the UE 901. In general, the UE 910 measures a partial antenna port CSI-RS transmitted from the base station 902, and predicts a full antenna port channel, based thereon. In addition, the UE 901 may measure a full antenna port CSI-RS transmitted by the base station 902 periodically. When measuring the full antenna port CSI-RS, the UE 901 may measure the prediction performance through AI performance metrics. The AI performance metrics may be the square of the generalized cosine similarity (SGCS) or the mean squared error (MSE). The limit value of the prediction performance may be configured in advance by using the SGCS or MSE, and the limit value of the SGCS or MSE may be defined as a preconfigured reference. Additionally, the UE 901 may be aware of a channel relationship in the form of a channel covariance matrix every time the full antenna port CSI-RS is measured, and this also enables comparative analysis of performance.

For example, the UE 901 may request the base station 902 to use only port patterns that satisfy MSE of a predetermined threshold value or less by comparing the MSE between the restored full antenna port channel and the ground-truth channel with regard to port patterns used periodically by the UE 901. As another example, the UE 901 may request the base station 902 to use only port patterns that satisfy SGCS of a predetermined threshold value or less by comparing the SGCS between the restored full antenna port channel and the ground-truth channel with regard to port patterns used periodically by the UE 901. The MSE or SGCS of a predetermined threshold value or less may be defined as a predetermined reference. In addition, step 970 may be defined as a process in which the UE 901 transmits a message requesting use of a port pattern satisfying the preconfigured criterion to the base station 902.

Meanwhile, step 970 may be performed before step 960 or after step 960.

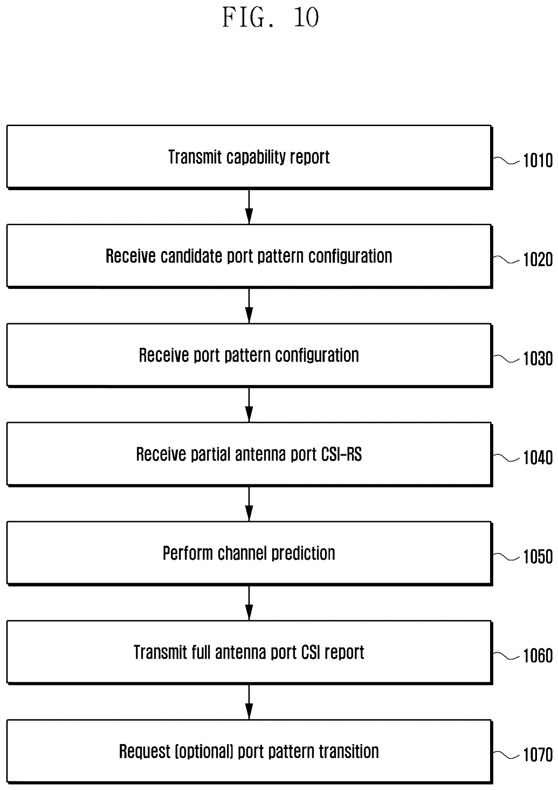

FIG. 10 illustrates a CSI-RS-based spatial domain channel prediction method of a UE according to an embodiment of the disclosure.

The content in FIG. 10 may be related to the description of the relationship between the UE and the base station in the spatial domain channel estimation process in FIG. 9. That is, the content in FIG. 10 may be related to the content in FIG. 9. Operations or content omitted in FIG. 10 may be referred to the corresponding configurations in FIG. 9.

Referring to FIG. 10, in operation 1010, the UE may transmit capability information to the base station. The capability information may be defined as performance information. The UE may transmit capability information to the base station by using a capability report. The capability report may include a UE capability information report. The capability report may include spatial domain channel prediction-related capability information. The UE capability information may be reported in case that there is a reporting request from the base station.
a) In case that the UE uses its own AI model for spatial domain channel prediction, the UE may transmit self-trained port pattern-related information to the base station in the process of transmitting a capability report to the base station before performing spatial domain channel prediction. The port pattern-related information may include information for identifying the port pattern, and may include a port pattern index trained by the UE, for example, but is not limited thereto. The information transmitted from the UE to the base station may be referred to as UE-assisted information. In general, the more the measured ports, the easier to estimate the full antenna port, thereby enabling channel prediction with a low level of AI model complexity (e.g., the number of model parameters, the number of FLOPs). In an embodiment of the disclosure, partial antenna ports may be measured ports. The AI model complexity may be related to the number of model parameters and/or floating point operations (FLOPs). Since each UE has different AI-related complexity capability information, the minimum number of measured ports required for full antenna port channel prediction may vary. Since the required minimum measured ports, i.e., partial antenna ports, are different, the port pattern trained internally by the UE may be different. Therefore, in case that the UE uses a self-trained AI model, a procedure for reporting the port pattern internally trained by the UE may be required. The manner in which the port pattern is reported may vary according to whether the same is defined in standards.
   For example, in case that a port pattern table such as in FIG. 8A, FIG. 8B, FIG. 8C, FIG. 8D, FIG. 8E, FIG. 8F, FIG. 8G, or FIG. 8H is defined in standards, the UE may transmit indices of the port patterns trained by the UE with regard to each CSI-RS port to the base station. The UE may transmit indices of port patterns trained by the UE with the number of ports configured by the base station to the base station.
b) In case that the base station transmits a spatial domain channel prediction AI model to the UE, the UE may perform spatial domain channel prediction by using the AI model transferred from the base station. Such a performing method may be defined as model transfer-based AI model inference-type channel prediction performing. In case of performing model transfer-based AI model inference-type channel prediction, the AI model itself is held by the base station. Therefore, the UE may report capability information for driving the AI model to the base station. The capability information transmitted by the UE may be AI complexity capability information. The AI complexity capability information of the UE may include at least one of the maximum allowable memory, storage, and computation capability information. For example, the UE may transmit UE-specific allowable complexity, among categorized AI-related UE capability information, to the base station. The base station may determine an AI model suitable for the capability information received from the UE, and may transmit the determined AI model to the UE. The UE 901 may report a port reduction ratio, based on its capability information.

In step 1020, the UE may receive port pattern-related information to from the base station. The port pattern-related information may include information regarding at least one port pattern. The port pattern-related information may be defined as a candidate port pattern configuration, but the same is not limited thereto. The candidate port pattern configuration information may be received by the UE through a radio resource control (RRC) message.

In step 1030, the UE may receive port pattern configuration-related information from the base station. The port pattern configuration-related information may be received by the UE as DCI, a MAC CE, or the like. For example, the port pattern to be measured by the UE among the multiple port patterns configured based on the candidate port pattern configuration may be indicated through port pattern configuration-related information. In step 1030, one or multiple port patterns may be indicated. When one port pattern is used, the corresponding index may have been be configured, and when multiple port patterns are used, the port pattern configuration may have been performed by configuring all of the corresponding indices.

When a port pattern is configured, additional parameters may be configured. That is, when multiple port patterns are configured, the port patterns may be used in a mixed manner according to the CSI-RS transmission periodicity and/or the base station's performance monitoring results. In case that port patterns are used in a mixed manner, the UE may use the port channel measured before the port pattern change to predict a new port pattern. Therefore, a performance gain may be obtained in terms of implementation by configuring additional parameters such that part patterns are used in a mixed manner.

For example, different port patterns may be used during odd-numbered CSI-RS transmission and even-numbered CSI-RS transmission. Another example is a case in which each port pattern has a different influence on the AI inference performance. A dominant pattern which has a great impact on performance may be used more frequently than other patterns.

In step 1040, the UE may receive a CSI-RS from the base station. The UE may receive a CSI-RS from the base station, based on a port pattern configuration. The UE may receive a CSI-RS from the base station, based on CSI-RS configuration-related information and a port pattern configuration. The CSI-RS may be a CSI-RS based on a partial antenna port. The relationship between the full antenna port and the partial antenna port is referred to the description of the embodiment in FIG. 4.

In step 1050, the UE may predict (or estimate) a channel state. The channel state may be a spatial-domain channel state. The UE may predict a channel state regarding a full antenna port, based on channel state measurement regarding a partial antenna port. The UE may measure a CSI-RS regarding a partial antenna port transmitted from the base station. The UE may estimate a channel state regarding a partial antenna port, based on a CSI-RS measurement regarding a partial antenna port. The UE may then predict a channel state regarding a full antenna port, based on the estimated channel state regarding a partial antenna port. For example, the UE may predict channel states regarding M full antenna ports, based on channel states acquired based on CSI-RS measurement regarding L partial antenna ports. The process of predicting the full antenna port channel state may be defined as a spatial domain channel prediction process. AI may be used in the full antenna port channel prediction process. The AI used in this regard may be, for example, a channel predictor 220 or 340, but is not limited thereto.

In step 1060, the UE may report channel state information (CSI) to the base station. The channel state information may be channel state information regarding full antenna ports. The channel state information regarding full antenna ports may be channel state information predicted from channel states estimated with respect to partial antenna ports. The channel state information regarding full antenna ports may include at least one of the number of spatial dimensions (rank indicator (RI)), a precoding matrix indicator (PMI), and channel state information (channel quality indicator (CQI)). According to an embodiment, the UE may transmit the channel state information regarding full antenna ports to the base station in case that there is a request of the base station or in case that a preconfigured reporting condition is satisfied.

In step 1070, the UE may transmit a message requesting a port pattern transition to the base station. A channel identified based on the full antenna port CSI-RS measured may be referred to as a ground-truth channel, and a full antenna port channel predicted from a partial antenna port channel may be referred to as a restored full antenna port channel. Channel measurement based on the full antenna port CSI-RS may be performed periodically, or may be performed aperiodically or periodically at the request of the UE. Step 1070 may be performed before step 1060 or after step 1060.

In step 1070, the UE 901 may transmit a request signal for requesting a port pattern transition to the base station when a specific event occurs. The request signal transmission step of the UE is an optional step and may be performed as needed. Since the subject who can measure raw channels is the UE, there is an advantage in measuring the predicted performance by the UE. In general, the UE measures a partial antenna port CSI-RS transmitted from the base station, and predicts a full antenna port channel, based thereon. In addition, the UE may measure a full antenna port CSI-RS transmitted by the base station periodically. When measuring the full antenna port CSI-RS, the UE may measure the prediction performance through AI performance metrics. The AI performance metrics may be the square of the generalized cosine similarity (SGCS) or the mean squared error (MSE). Additionally, the UE may be aware of a channel relationship in the form of a channel covariance matrix every time the full antenna port CSI-RS is measured, and this also enables comparative analysis of performance.

For example, the UE may request the base station to use only port patterns that satisfy MSE of a predetermined threshold value or less by comparing the MSE between the restored full antenna port channel and the ground-truth channel with regard to port patterns used periodically by the UE. As another example, the UE may request the base station to use only port patterns that satisfy SGCS of a predetermined threshold value or less by comparing the SGCS between the restored full antenna port channel and the ground-truth channel with regard to port patterns used periodically by the UE.

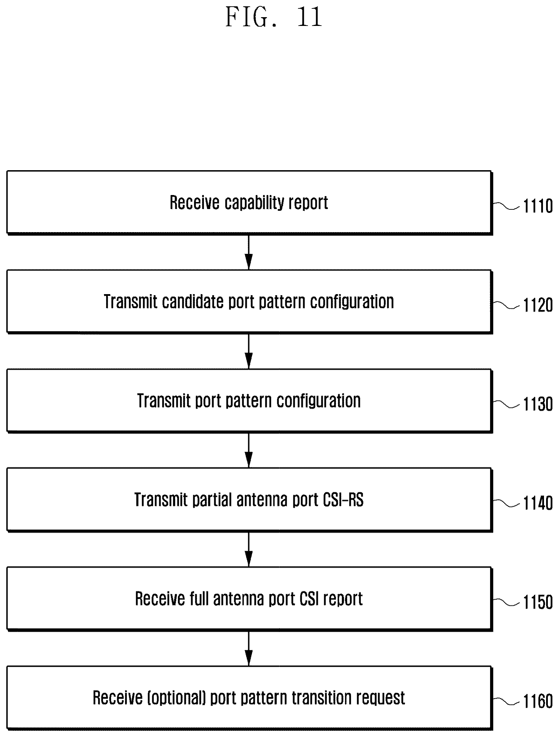

FIG. 11 illustrates a CSI-RS-based spatial domain channel prediction method by a base station according to an embodiment of the disclosure.

The content in FIG. 11 may be related to the description of the relationship between the UE and the base station in the spatial domain channel estimation process in FIG. 9. That is, the content in FIG. 11 may be related to the content in FIG. 9. Operations or content omitted in FIG. 11 may be referred to the corresponding configurations in FIG. 9.

Referring to FIG. 11, in step 1110, the base station may receive capability information from the UE. The capability information may be defined as performance information. The base station may receive the capability information from the UE through a capability report. The capability report may include a UE capability information report. The capability report may include capability information related to spatial domain channel prediction. The base station may request the UE to report UE capability information. The base station may select partial antenna ports from full antenna ports, based on the capability report received from the UE. This selection process may be defined as a port selection process. The base station may configure a partial antenna port through the port selection process, and the port pattern may vary depending on the type of the configured partial antenna port.

Information of the capability report received by the base station from the UE may differ depending on whether the UE uses its own AI model for spatial domain channel prediction or the base station transmits an AI model for spatial domain channel prediction to the UE.
a) In case that the UE uses its own AI model for spatial domain channel prediction, the base station may receive a port pattern self-trained by the UE. Information received by the base station from the UE may be referred to as UE-assisted information. In general, the more the measured ports, the easier to estimate the channel state of the full antenna port, thereby enabling channel prediction with a low level of AI model complexity (e.g., the number of model parameters, the number of FLOPs). In the disclosure, partial antenna ports may be measured ports. The AI model complexity may be related to the number of model parameters and/or floating point operations (FLOPs). Since each UE typically has different AI-related complexity capability information, the minimum number of measured ports required for full antenna port channel prediction may vary. Since the required minimum measured ports, i.e., partial antenna ports, are different, the port pattern trained internally by the UE may be different. Therefore, in case that the UE uses a self-trained AI model, a procedure in which the base station receives the port pattern internally trained by the UE may be required. The manner in which the port pattern is reported may vary according to whether the same is defined in standards.
   For example, in case that a port pattern table such as in FIG. 8A, FIG. 8B, FIG. 8C, FIG. 8D, FIG. 8E, FIG. 8F, FIG. 8G, or FIG. 8H is defined in standards, the base station may receive indices of the port patterns trained by the UE with regard to each CSI-RS port from the UE. The base station may receive indices of port patterns trained by the UE with the configured number of ports from the UE.
b) In case that the base station transmits a spatial domain channel prediction AI model to the UE, the UE may perform spatial domain channel prediction by using the AI model transferred from the base station. Such a performing method may be defined as model transfer-based AI model inference-type channel prediction performing. In case of performing model transfer-based AI model inference-type channel prediction, the AI model itself is held by the base station. Therefore, the base station may receive a capability report for driving the AI model from the UE. The capability report received by the base station from the UE may be an AI complexity capability report. The AI complexity capability information received by the base station from the UE may include at least one of the maximum allowable memory, storage, and computation capability information. For example, the base station may receive UE-specific allowable complexity, among categorized AI-related UE capability information, from the UE. The base station may determine an AI model suitable for the capability information received from the UE, and may transmit the determined AI model to the UE.

In step 1120, the base station may transmit information regarding port patterns to the UE. The information regarding port patterns may include information regarding at least one port pattern. The information regarding port patterns may be defined as a candidate port pattern configuration, but is not limited thereto. The candidate port pattern configuration information may be transmitted to the UE through a radio resource control (RRC) message. When configuring the candidate port pattern, the base station may consider the UE capability information in step 910. In addition, when configuring the candidate port pattern, the base station may use a standard-defined table or a UE-specific (vendor-specific or site-specific) port pattern.

In case that the base station configures one of standard-defined port patterns, the base station may have received a port pattern index from the UE in step 1110. Therefore, the base station may configure the index of patterns to be selectively used among full port patterns and may transmit configuration information to the UE. In case that all port patterns corresponding to a specific port number are to be used, an index corresponding to full pattern use may be transmitted. For example, in case that only the number of ports, not the index of a specific port pattern, is indicated, it may understand that the UE and the base station use the full port pattern supporting the corresponding number of ports.

The spatial domain channel prediction performance is greatly affected by the port pattern, which may vary depending on the site channel environment (e.g., scatter, reflector, etc.) and the vendor's antenna configuration implementation. Therefore, in case that the degree of freedom regarding port pattern design is large, the vendor and/or site may operate port patterns in a site-specific or site-common manner. In case that each vendor and/or site uses its own specific pattern, the port pattern to be operated by the base station may be configured in a bitmap format, and candidate port pattern configuration information may be transmitted to the UE. The base station may transmit, to the UE, not only the candidate port pattern, but also an AI model trained by candidate port patterns. The base station may provide the UE with information regarding the AI model in advance, or may provide the UE with information regarding the AI model together with candidate port pattern configurations.

In step 1130, the base station may transmit port pattern configuration-related information to the UE. The port pattern configuration-related information may be transmitted to the UE as DCI, a MAC CE, or the like. For example, the port pattern to be measured by the UE, among multiple port patterns configured based on the candidate port pattern configuration information, may be indicated through port pattern configuration-related information. The UE may identify the port pattern according to a configured port pattern, and perform AI-related inference. In step 930, one or multiple port patterns may be indicated. In case that one port pattern is used, the corresponding index may be configured. In case that multiple port patterns are used, a port pattern configuration may be performed by configuring all the corresponding indices. Alternatively, multiple port patterns may be indicated by a method of indicating a specific group, a specific number of ports, or a specific ratio.

When a port pattern is configured, additional parameters may be configured. In other words, when configuring multiple port patterns, the port patterns may be used in a mixed manner according to the CSI-RS transmission periodicity and/or the performance monitoring result of the base station.

The base station may configure the port pattern to change when a specific event occurs. In addition, the base station may configure the index of the port pattern that changes when a specific event occurs. For example, the base station may configure the port pattern to change when the performance metric is degraded while AI/ML-related life-cycle management (LCM) is performed, and may configure the related port pattern index. As another example, in case that the base station monitors the cell throughout as the performance metric, the base station may configure a port pattern change according to a throughput reduction, and may configure a related port pattern index. As another example, the base station may configure the port pattern to change when the performance of a mean squared error (MSE) between a predicted (or restored) full antenna port channel and a ground-truth full antenna port channel is greater than or equal to a specific threshold value, and may configure a related port pattern index. As another example, the base station may configure a port pattern change for each change when the port pattern is changed and used for each specific location range (e.g., zone 1, zone 2, ...), and whenever the location of the UE is out of the specific location range (e.g., zone 1-> zone 2), and may configure a related port pattern index.

In step 1140, the base station may transmit a CSI-RS to the UE. The base station may transmit a CSI-RS to the UE, based on a port pattern configuration. The base station may transmit a CSI-RS to the UE, based on CSI-RS configuration-related information and a port pattern configuration. The CSI-RS may be a CSI-RS based on a partial antenna port. The relationship between the full antenna port and the partial antenna port is referred to the description of the embodiment in FIG. 4.

In step 1150, base station may receive channel state information (CSI) from the UE. The channel state information may be channel state information regarding full antenna ports. The channel state information regarding full antenna ports may be channel state information predicted from channel states estimated with regard to partial antenna ports. The channel state information regarding full antenna ports may include at least one of the number of spatial dimensions (rank indicator (RI)), a precoding matrix indicator (PMI), and channel state information (channel quality indicator (CQI)).

In step 1160, the base station may receive a message requesting a port pattern transition from the UE. A channel measured based on the received full antenna port CSI-RS may be referred to as a ground-truth channel, and a full antenna port channel predicted from a partial antenna port channel may be referred to as a restored full antenna port channel. Channel measurement based on the full antenna port CSI-RS may be performed periodically, or may be performed aperiodically or periodically at the request of the UE. Step 1160 may be performed before step 1150 or after step 1150.

In step 1160, the base station may receive a request signal requesting a port pattern transition from the UE. For example, the base station may be requested by the UE to use only port patterns that satisfy MSE equal to or less than a predetermined threshold value. As another example, the base station may be requested by the UE to use only port patterns satisfying SGCS equal to or less than a predetermined threshold value.

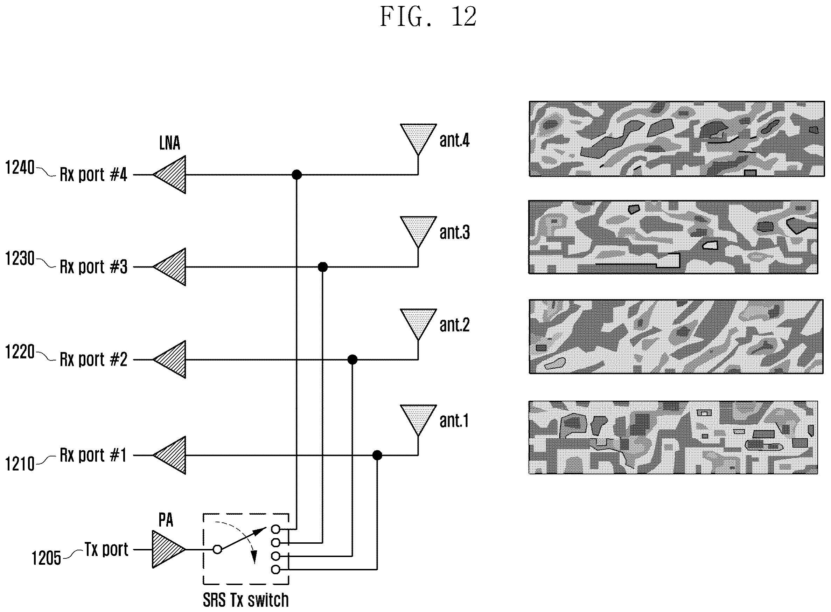

FIG. 12 is a diagram illustrating an SRS-related transmit antenna switching (TAS) technique according to an embodiment of the disclosure.

Although an embodiment of the disclosure is described based on a case in which the number of rx ports is 4, but this concept may also be identically or similarly applied to a case in which the number of rx ports is 4, 8, 16, 32, 64, 128, 256, or more.

A sounding reference signal (SRS) is operated by transmitting the same while switching the tx port 1205 inside the UE. According to an embodiment of the disclosure, the base station may measure a sounding reference signal (SRS) corresponding to a partial rx port among rx port #1 1210, rx port #2 1220, rx port #3 1230, and rx port #4 1240. Thereafter, the channel state of the full rx port may be predicted based on the sounding reference signal corresponding to the measured partial rx port.

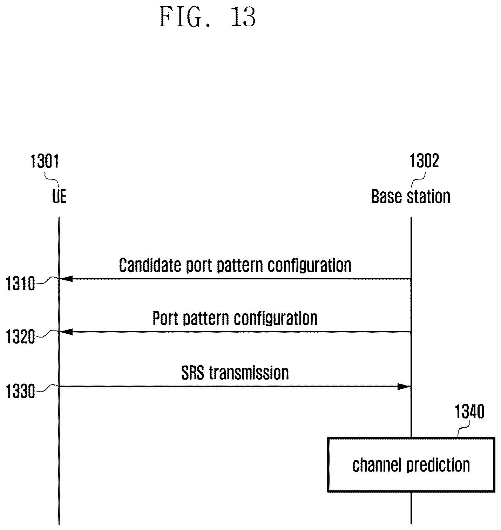

FIG. 13 is a diagram illustrating a method for SRS-based spatial domain channel prediction between a UE and a base station according to an embodiment of the disclosure.

Referring to FIG. 13, in step 1310, the base station 1302 may transmit information regarding port patterns to the UE 1301. The information regarding port patterns may include information regarding at least one port pattern. The information regarding port patterns may be defined as a candidate port pattern configuration, but the present disclosure is not limited thereto. The candidate port pattern configuration information may be transmitted to the UE 1301 through an RRC message. The base station 1302 may configure a candidate port pattern by using a standard-defined table or a UE-specific (vendor-specific or site-specific) port pattern. [Table 4] below is an example of SRS-related port patterns according to the port reduction ratio for each port number according to an embodiment of the disclosure. In case that a table like [Table 4] is defined in standards, the base station 1302 may use [Table 4] to configure the candidate port pattern.

**[Table 4]**

| Num. of ports | 1 (port reduction ratio = 1/4) | | | | 2 (port reduction ratio = 1/2) | | | | | | 3 (port reduction ratio = 3/4) | | | 4 |
|---|---|---|---|---|---|---|---|---|---|---|---|---|---|---|
| Port pattern | {1} | {2} | {3} | {4} | {1, 2} | {1, 3} | {1, 4} | {2, 3} | {2, 4} | {3, 4} | {1, 2, 3} | {1,2, 4} | {2, 3, 4} | {1, 2, 3, 4} |

In case of configuring the candidate port pattern among standard-defined port patterns, the base station 1302 may configure the indices of patterns to be optionally used among full port patterns, and may transmit the configuration information to the UE 1301. If all port patterns corresponding to a specific port number are to be used, the base station 1302 may transmit an index corresponding to the full pattern use to the UE 1301. For example, in case that only the number of ports is indicated, instead of the index of a specific port pattern, it may be understood that the UE 1301 and the base station 1302 use a full port pattern supporting the corresponding number of ports.

The spatial domain channel prediction performance is greatly affected by the port pattern, which may vary depending on the site channel environment (e.g., scatter, reflector, etc.) and the vendor's antenna configuration implementation. Therefore, in case that the degree of freedom regarding port pattern design is large, the vendor and/or site may operate port patterns in a site-specific or site-common manner. In case that each vendor and/or site uses its own specific pattern, the port pattern to be operated by the base station 1302 may be configured in a bitmap format, and candidate port pattern configuration information may be transmitted to the UE 1301.

In step 1320, the base station 1302 may transmit port pattern configuration-related information to the UE 1301. The port pattern configuration-related information may be transmitted to the UE 1301 as downlink control information (DCI), a medium access control - control element (MAC CE), or the like. In case that one port pattern is used, the corresponding index may be configured. In case that multiple port patterns are used, a port pattern configuration may be performed by configuring all the corresponding indices. Alternatively, multiple port patterns may be indicated by a method of indicating a specific group, a specific number of ports, or a specific ratio.

When the base station 1302 configures a part pattern for the UE 1301, additional parameters may be configured. That is, when configuring multiple port patterns, the port patterns may be used in a mixed manner according to the SRS transmission periodicity and/or the performance monitoring result of the base station 1302. In case that port patterns are used in a mixed manner, the base station 1302 may use the port channel measured before a port pattern change to predict a new port pattern. Therefore, a performance gain may be obtained in terms of implementation by configuring additional parameters and thus using port patterns in a mixed manner.

For example, a case in which different port patterns are used during odd-numbered SRS transmission and even-numbered SRS transmission may be as in [Table 5] below. The numbers in the second row of [Table 5] indicate port pattern indices. (1: port pattern 1, 2: port pattern 2)

**[Table 5]**

| First | -> | Second | -> | Third | -> | Fourth | -> | Fifth | -> | Sixth | ... |
|---|---|---|---|---|---|---|---|---|---|---|---|
| 1 | | 2 | | 1 | | 2 | | 1 | | 2 | ... |

In another exemplary case, the influence on the AI inference performance differs for each port pattern. The case in which a dominant pattern that has a large effect on performance is used more frequently than other patterns may be as in [Table 6] below. The numbers in the second row in [Table 6] indicate port pattern numbers. (1: port pattern 1, 2: port pattern 2)

The case in [Table 6] is an example in which port pattern 1 is a dominant pattern that has a greater influence on performance than port pattern 2.

**[Table 6]**

| First | -> | Second | -> | Third | -> | Fourth | -> | Fifth | -> | Sixth | ... |
|---|---|---|---|---|---|---|---|---|---|---|---|
| 1 | | 1 | | 1 | | 1 | | 2 | | 1 | ... |

The base station 1302 may configure the port pattern to change when a specific event occurs. In addition, the base station 1302 may configure the index of the port pattern that changes when a specific event occurs. For example, the base station 1302 may configure the port pattern to change when the performance metric is degraded while AI/ML-related life-cycle management (LCM) is performed, and may configure the related port pattern index. As another example, in case that the base station 1302 monitors the cell throughout as the performance metric, the base station 902 may configure a port pattern change according to a throughput reduction, and may configure a related port pattern index. As another example, the base station 1302 may configure the port pattern to change when the MSE performance between a predicted (or restored) full antenna port channel and a ground-truth channel is greater than or equal to a specific threshold value, and may configure a related port pattern index. As another example, the base station 1302 may configure a port pattern change for each change when the port pattern is changed and used for each specific location range (e.g., zone 1, zone 2, ...), and whenever the location of the UE is out of the specific location range (e.g., zone 1-> zone 2), and may configure a related port pattern index.

In step 1330, the UE 1301 may transmit an SRS to the base station 1302. The UE 1301 may transmit an SRS to the base station 1302, based on a port pattern configuration. The UE 1301 may transmit an SRS to the base station 1302, based on SRS configuration-related information and port pattern configurations. The SRS may be an SRS based on a partial rx port.

In operation 1340, the base station 1302 may predict (or estimate) a channel state. The channel state may be a space-domain channel state. The base station 1302 may predict the channel state regarding a full rx port, based on channel state measurement regarding a partial rx port. The base station 1302 may measure an SRS regarding a partial rx port transmitted from the UE 1301. The base station 1302 may estimate the channel state regarding the partial rx port, based on SRS measurement regarding the partial rx port. Thereafter, the base station 1302 may predict the channel state regarding the full rx port, based on the estimated channel state regarding the partial rx port. For example, the base station 1302 may predict channel states regarding M full rx ports, based on channel states acquired based on SRS measurement regarding L partial rx ports. The process of predicting the full rx port channel state may be defined as a spatial domain channel prediction process. AI may be used in the full rx port channel state prediction process. The AI used in this regard may be, for example, a channel predictor 220 or 340, but is not limited thereto.

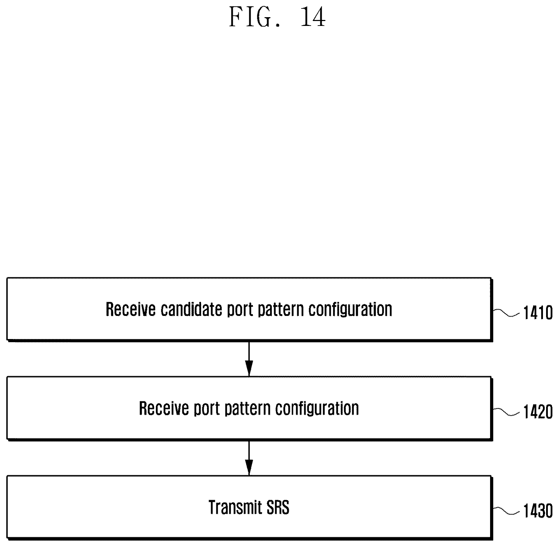

FIG. 14 is a diagram illustrating a method of SRS-based spatial domain channel prediction by a UE according to an embodiment of the disclosure.

The content in FIG. 14 may be related to the description of the relationship between the UE and the base station in the spatial domain channel estimation process in FIG. 13. That is, the content in FIG. 14 may be related to the content in FIG. 13. Operations or content omitted in FIG. 14 may be referred to the corresponding configurations in FIG. 13.

Referring to FIG. 14, in step 1410, the UE may receive information regarding port patterns from the base station. The information regarding port patterns may include information regarding at least one port pattern. The information regarding port patterns may be defined as a candidate port pattern configuration, but is not limited thereto. The candidate port pattern configuration information may be received by the UE through an RRC message. The candidate port pattern configuration information may be based on consideration of a table defined in standards or a UE-specific port pattern.

In case of configuring a candidate port pattern among standard-defined port patterns, the UE may receive, from the base station, configuration information having configured indices of patterns to be optionally used among full port patterns. If all port patterns corresponding to a specific port number are to be used, the index corresponding to the full pattern use may be received.

The spatial domain channel prediction performance is greatly affected by the port pattern, which may vary depending on the site channel environment (e.g., scatter, reflector, etc.) and the vendor's antenna configuration implementation. Therefore, in case that the degree of freedom regarding port pattern design is large, the vendor and/or site may operate port patterns in a site-specific or site-common manner. In case that each vendor and/or site uses its own specific pattern, the UE may receive a specific port pattern from the base station in a bitmap format.

In step 1420, the UE may receive port pattern configuration-related information from the base station. The port pattern configuration-related information may be received as DCI, a MAC CE, or the like. In step 1420, one or more port patterns may have been used. When one port pattern is used, the corresponding index may have been configured, and when multiple port patterns are used, the corresponding indices may all be configured, thereby performing the port pattern configuration.

When a port pattern is configured, additional parameters may be configured. That is, when multiple port patterns are configured, the port patterns may be used in a mixed manner according to the SRS transmission periodicity and/or the performance monitoring result of the base station. In case that port patterns are used in a mixed manner, the UE may use a port channel measured before a port pattern change to predict a new port pattern. Therefore, a performance gain may be obtained in terms of implementation by configuring additional parameters and thus using port patterns in a mixed manner.

In operation 1430, the UE may transmit an SRS to the base station. The UE may transmit an SRS to the base station, based on a port pattern configuration. The UE may transmit an SRS to the base station, based on SRS configuration-related information and a port pattern configuration. The SRS may be an SRS based on a partial rx port.

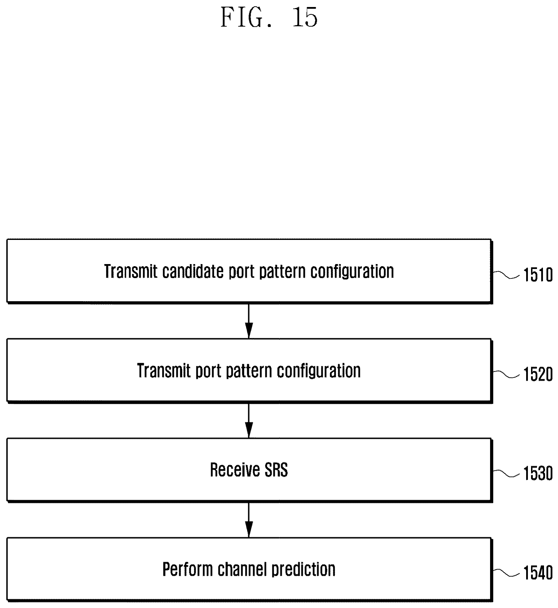

FIG. 15 illustrates a method for spatial domain channel prediction based on SRS by a base station according to an embodiment of the disclosure.

That is, the content in FIG. 15 may be related to the content in FIG. 13. Operations or content omitted in FIG. 15 may be referred to the corresponding configurations in FIG. 13.

Referring to FIG. 15, in step 1510, the base station may transmit information regarding port patterns to the UE. The information regarding port patterns may include information regarding at least one port pattern. The information regarding port patterns may be defined as a candidate port pattern configuration, but is not limited thereto. The candidate port pattern configuration information may be transmitted to the UE through an RRC message. When configuring a candidate port pattern, the base station may use a standard-defined table or a UE-specific (vendor-specific or site-specific) port pattern.

In case of configuring the candidate port pattern among standard-defined port patterns, the base station may configure the indices of patterns to be optionally used among full port patterns, and may transmit the configuration information to the UE. If all port patterns corresponding to a specific port number are to be used, the index corresponding to the full pattern use may be transmitted. For example, in case that only the number of ports is indicated, instead of the index of a specific port pattern, it may be understood that the UE and the base station use a full port pattern supporting the corresponding number of ports.

The spatial domain channel prediction performance is greatly affected by the port pattern, which may vary depending on the site channel environment (e.g., scatter, reflector, etc.) and the vendor's antenna configuration implementation. Therefore, in case that the degree of freedom regarding port pattern design is large, the vendor and/or site may operate port patterns in a site-specific or site-common manner. In case that each vendor and/or site uses its own specific pattern, the port pattern to be operated by the base station may be configured in a bitmap format, and candidate port pattern configuration information may be transmitted to the UE.

In step 1520, the base station may transmit port pattern configuration-related information to the UE. The port pattern configuration-related information may be transmitted to the UE as DCI, a MAC CE, or the like. In step 150, one or multiple port patterns may be indicated. In case that one port pattern is used, the corresponding index may be configured. In case that multiple port patterns are used, a port pattern configuration may be performed by configuring all the corresponding indices. Alternatively, multiple port patterns may be indicated by a method of indicating a specific group, a specific number of ports, or a specific ratio.

When configuring a part pattern, additional parameters may be configured for the UE. That is, when configuring multiple port patterns, the port patterns may be used in a mixed manner according to the SRS transmission periodicity and/or the performance monitoring result of the base station. In case that port patterns are used in a mixed manner, the base station may use the port channel measured before a port pattern change to predict a new port pattern. Therefore, a performance gain may be obtained in terms of implementation by configuring additional parameters and thus using port patterns in a mixed manner.

In step 1530, the base station may receive an SRS from the UE. The base station may receive an SRS based on a port pattern configuration from the UE. The base station may receive an SRS based on SRS configuration-related information and a port pattern configuration from the UE. The SRS may be an SRS based on a partial rx port.

In step 1540, the base station may predict (or estimate) a channel state. The channel state may be a space-domain channel state. The base station may predict the channel state regarding a full rx port, based on channel state measurement regarding a partial rx port. The base station may measure an SRS regarding a partial rx port transmitted from the UE. The base station may estimate the channel state regarding the partial rx port, based on SRS measurement regarding the partial rx port. Thereafter, the base station may predict the channel state regarding the full rx port, based on the estimated channel state regarding the partial rx port. For example, the base station may predict channel states regarding M full rx ports, based on channel states acquired based on SRS measurement regarding L partial rx ports. The process of predicting the full rx port channel state may be defined as a spatial domain channel prediction process. AI may be used in the full rx port channel state prediction process. The AI used in this regard may be, for example, a channel predictor 220 or 340, but is not limited thereto.

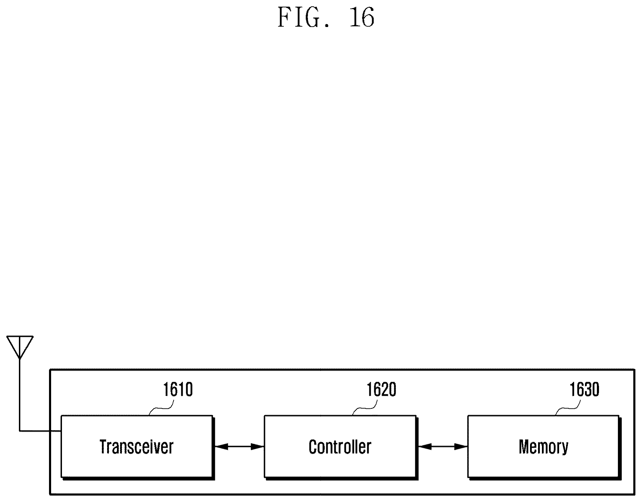

FIG. 16 is a diagram illustrating the structure of a UE in a wireless communication system according to an embodiment of the disclosure.

Referring to FIG. 16, the UE according to an embodiment of the disclosure may include a transceiver 1610, a controller 1620, and a memory 1630. In the disclosure, the controller 1620 of the UE may be defined as a circuit, an application specific integrated circuit, or at least one processor.

The transceiver 1610 may transmit/receive signals. The transceiver 1610 may, for example, transmit signals to a satellite or a base station according to an embodiment of the disclosure, and may receive signals from the satellite or the base station.

The controller 1620 may control the overall operation of the UE according to various embodiments proposed in the disclosure. For example, the controller 1620 may control signal flows between respective blocks so as to perform operations according to the drawings (or flowcharts or sequence diagrams) described above.

For example, the controller 1620 may control the UE to receive information related to a channel state information reference signal (CSI-RS) from the base station, measure a partial antenna port CSI-RS transmitted from the base station, based on the information related to the CSI-RS, estimate a channel state regarding a partial antenna port, based on measurement of the partial antenna port CSI-RS, acquire channel state information regarding a full antenna port, based on the channel state regarding the partial antenna port, and report the channel state information regarding the full antenna port to the base station. The full antenna port is an antenna port regarding which the base station wants to receive channel state information, and the partial antenna port may be a part of the full antenna port.

In addition, the controller 1620 may control the UE to transmit channel prediction-related capability information to the base station, receive candidate port pattern-related information including multiple port patterns determined based on the channel prediction-related capability information from the base station, and receive port pattern configuration-related information indicating the port pattern to be measured by the UE among the multiple port patterns from the base station. The candidate port pattern-related information may be received through a radio resource control (RRC) message, and the port pattern configuration-related information may be received as downlink control information (DCI) or a medium access control-control element (MAC-CE).

In addition, the controller 1620 may acquire channel state information regarding the full antenna port, based on the result of artificial intelligence (AI) training performed with regard to the candidate port pattern and the channel state regarding the partial antenna port.

In addition, the controller 1620 may control the UE to measure the full antenna port channel state information reference signal transmitted from the base station, compare channel state information regarding the full antenna port measured through the full antenna port channel state information reference signal and channel state information regarding the full antenna port acquired based on the channel state regarding the partial antenna port, and transmit, to the base station, a message requesting the use of a port pattern that satisfies a preconfigured criterion, based on the comparison result.

The functions of the controller are not limited to the above examples.

The memory 1630 may store at least one from among information transmitted/received through the transceiver 1610 and information generated through the controller 1620.

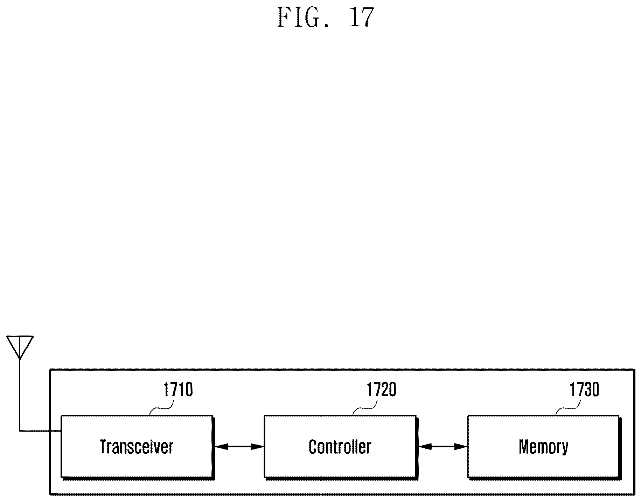

FIG. 17 illustrates the structure of a base station in a wireless communication system according to an embodiment of the disclosure.

Referring to FIG. 17, the base station according to an embodiment of the disclosure may be configured to include a transceiver 1710, a controller 1720, and a memory 1730. In the disclosure, the controller 1720 of the base station may be defined as a circuit or an application specific integrated circuit or at least one processor.

The transceiver 1710 may transmit/receive signals. The transceiver 1710 may transmit signals to a UE according to an embodiment of the disclosure, for example, or may receive signals from the UE. Alternatively, the transceiver 1710 may transmit/receive signals with other satellites through a satellite-to-satellite link, and may also perform satellite-to-satellite multi-hop communication.

The controller 1720 may control the overall operation of the base station according to various embodiments proposed in the disclosure. For example, the controller 1720 may control signal flows between respective blocks so as to perform operations according to the drawings (or flowcharts or sequence diagrams) described above.

For example, the controller 1720 may control the base station to transmit information related to a channel state information reference signal (CSI-RS) to the UE, transmit a partial antenna port CSI-RS to the UE, based on the information related to the CSI-RS, and receive channel state information regarding a full antenna port. The full antenna port is an antenna port regarding which the base station wants to receive channel state information, and the partial antenna port may refer to a part of the full antenna port.

In addition, the controller 1720 may control the base station to receive channel prediction-related capability information from the UE, transmit, to the UE, candidate port pattern-related information including multiple port patterns determined based on the channel prediction-related capability information, and transmit, to the UE, port pattern configuration-related information indicating the port pattern to be measured by the UE among the multiple port patterns. The candidate port pattern-related information may be received through a radio resource control (RRC) message, and the port pattern configuration-related information may be received as downlink control information (DCI) or a medium access control-control element (MAC-CE).

In addition, the controller 1720 may acquire channel state information regarding the full antenna port, based on the result of the artificial intelligence (AI) training performed with regard to the candidate port pattern and the channel state regarding the partial antenna port.

In addition, the controller 1720 may control the base station to transmit a full antenna port channel state information reference signal to the UE and receive, from the UE, a message requesting the use of a port pattern satisfying a predetermined criterion.

The functions of the controller are not limited to the above examples.

The memory 1730 may store at least one from among information transmitted/received through the transceiver 1710 and information generated through the controller 1720.

In methods of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

Furthermore, although exemplary embodiments of the disclosure have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented.

## Claims

1. A method performed by a terminal in a wireless communication system, the method comprising:
receiving, from a base station, information related to a channel state information-reference signal (CSI-RS);
measuring a partial antenna port CSI-RS transmitted from the base station, based on the information related to the CSI-RS;
estimating a channel state for a partial antenna port, based on measurement of the partial antenna port CSI-RS;
acquiring channel state information for a full antenna port, based on the channel state for the partial antenna port; and
reporting, to the base station, the channel state information for the full antenna port.

2. The method of claim 1,
wherein the full antenna port is an antenna port for which the base station desires to receive channel state information, and
wherein the partial antenna port is a part of the full antenna port.

3. The method of claim 1, further comprising:
transmitting, to the base station, channel prediction-related capability information;
receiving, from the base station, candidate port pattern-related information comprising multiple port patterns determined based on the channel prediction-related capability information; and
receiving, from the base station, port pattern configuration-related information indicating a port pattern to be measured by the terminal among the multiple port patterns,
wherein the candidate port pattern-related information is received through a radio resource control (RRC) message, and
wherein the port pattern configuration-related information is received on downlink control information (DCI) or a medium access control-control element (MAC-CE).

4. The method of claim 1,
wherein the channel state information for the full antenna port is acquired based on an artificial intelligence (AI) training result performed for a candidate port pattern and the channel state for the partial antenna port.

5. The method of claim 1, further comprising:
measuring a full antenna port CSI-RS transmitted from the base station;
comparing channel state information for the full antenna port measured through the full antenna port CSI-RS with the channel state information for the full antenna port acquired based on the channel state for the partial antenna port; and
transmitting, to the base station, a message requesting use of a port pattern satisfying a preconfigured criterion, based on a result of the comparison.

6. A method performed by a base station in a wireless communication system, the method comprising:
transmitting, to a terminal, information related to a channel state information-reference signal (CSI-RS);
transmitting, to the terminal, a partial antenna port CSI-RS based on the information related to the CSI-RS; and
receiving, from the terminal, channel state information for a full antenna port,
wherein the channel state information for the full antenna port is acquired based on a channel state for a partial antenna port measured based on measurement of the partial antenna port CSI-RS.

7. The method of claim 6,
wherein the full antenna port is an antenna port for which the base station desires to receive channel state information, and
wherein the partial antenna port is a part of the full antenna port.

8. The method of claim 6, further comprising:
receiving, from the terminal, channel prediction-related capability information;
transmitting, to the terminal, candidate port pattern-related information comprising multiple port patterns determined based on the channel prediction-related capability information; and
transmitting, to the terminal, port pattern configuration-related information indicating a port pattern to be measured by the terminal among the multiple port patterns,
wherein the candidate port pattern-related information is transmitted through a radio resource control (RRC) message, and
wherein the port pattern configuration-related information is transmitted on downlink control information (DCI) or a medium access control-control element (MAC-CE).

9. The method of claim 6,
wherein the channel state information for the full antenna port is acquired based on an artificial intelligence (AI) training result performed for a candidate port pattern and the channel state for the partial antenna port.

10. The method of claim 6, further comprising:
transmitting, to the terminal, a full antenna port CSI-RS; and
receiving, from the terminal, a message requesting use of a port pattern satisfying a preconfigured criterion.

11. A terminal in a wireless communication system, the terminal comprising:
a transceiver; and
a controller,
wherein the controller is configured to perform control to:
receive, from a base station, information related to a channel state information-reference signal (CSI-RS);
measure a partial antenna port CSI-RS transmitted from the base station, based on the information related to the CSI-RS;
estimate a channel state for a partial antenna port, based on measurement of the partial antenna port CSI-RS;
acquire channel state information for a full antenna port, based on the channel state for the partial antenna port; and
report, to the base station, the channel state information for the full antenna port.

12. The terminal of claim 11,
wherein the full antenna port is an antenna port for which the base station desires to receive channel state information, and
wherein the partial antenna port is a part of the full antenna port.

13. The terminal of claim 11, wherein the controller is configured to perform control to:
transmit, to the base station, channel prediction-related capability information;
receive, from the base station, candidate port pattern-related information comprising multiple port patterns determined based on the channel prediction-related capability information; and
receive, from the base station, port pattern configuration-related information indicating a port pattern to be measured by the terminal among the multiple port patterns,
wherein the candidate port pattern-related information is received through a radio resource control (RRC) message, and
wherein the port pattern configuration-related information is received on downlink control information (DCI) or a medium access control-control element (MAC-CE).

14. The terminal of claim 11,
wherein the channel state information for the full antenna port is acquired based on an artificial intelligence (AI) training result performed for a candidate port pattern and the channel state for the partial antenna port.

15. The terminal of claim 11, wherein the controller is configured to perform control to:
measure a full antenna port CSI-RS transmitted from the base station;
compare channel state information for the full antenna port, measured through the full antenna port CSI-RS, with the channel state information for the full antenna port, acquired based on the channel state for the partial antenna port; and
transmit, to the base station, a message requesting use of a port pattern satisfying a preconfigured criterion, based on a result of the comparison.

16. A base station in a wireless communication system, the base station comprising:
a transceiver; and
a controller,
wherein the controller is configured to perform control to:
transmit, to a terminal, information related to a channel state information-reference signal (CSI-RS);
transmit, to the terminal, a partial antenna port CSI-RS based on the information related to the CSI-RS; and
receive channel state information for a full antenna port,
wherein the channel state information for the full antenna port is acquired based on a channel state for a partial antenna port, measured based on measurement of the partial antenna port CSI-RS.

17. The base station of claim 16,
wherein the full antenna port is an antenna port for which the base station desires to receive channel state information, and
wherein the partial antenna port is a part of the full antenna port.

18. The base station of claim 16, wherein the controller is configured to perform control to:
receive, from the terminal, channel prediction-related capability information;
transmit, to the terminal, candidate port pattern-related information comprising multiple port patterns determined based on the channel prediction-related capability information; and
transmit, to the terminal, port pattern configuration-related information indicating a port pattern to be measured by the terminal among the multiple port patterns,
wherein the candidate port pattern-related information is transmitted through a radio resource control (RRC) message, and
wherein the port pattern configuration-related information is transmitted on downlink control information (DCI) or a medium access control-control element (MAC-CE).

19. A base station wherein the channel state information for the full antenna port is acquired based on an artificial intelligence (AI) training result performed for a candidate port pattern and the channel state for the partial antenna port.

20. The base station of claim 16, wherein the controller is configured to perform control to:
transmit, to the terminal, a full antenna port CSI-RS; and
receive, from the terminal, a message requesting use of a port pattern satisfying a preconfigured criterion.
